# EUROPÄISCHE PATENTSCHRIFT

(11) **EP 4 591 426 B1**
(45) Veröffentlichungstag und Bekanntmachung des Hinweises auf die Patenterteilung: **19.11.2025**
(21) Anmeldenummer: 23794025.9
(22) Anmeldetag: 20.10.2023
(51) Int. Cl.: H02K 41/03, H02P 25/064, B65G 54/02

(54) **VERFAHREN ZUM BETREIBEN EINES PLANARANTRIEBSSYSTEMS UND PLANARANTRIEBSSYSTEM**
METHOD FOR OPERATING A PLANAR DRIVE SYSTEM, AND PLANAR DRIVE SYSTEM
PROCÉDÉ DE FONCTIONNEMENT D'UN SYSTÈME D'ENTRAÎNEMENT PLAN, ET SYSTÈME D'ENTRAÎNEMENT PLAN

(30) Priorität: 08.11.2022 DE 102022129508
(43) Veröffentlichungstag der Anmeldung: 30.07.2025
(73) Patentinhaber: Beckhoff Automation GmbH, 33415 Verl (DE)
(72) Erfinder: BECKHOFF, Johannes, 33758 Schloß Holte-Stukenbrock (DE); SENSEN, Dominik, 52134 Herzogenrath (DE); BALZER, Viktor, 32051 Herford (DE); BETTENWORTH, Manuel, 1130 Wien (AT); ACHTERBERG, Jan, 47249 Duisburg (DE)
(74) Vertreter: Patentanwaltskanzlei WILHELM & BECK
(86) Internationale Anmeldenummer: PCT/EP2023/079284
(87) Internationale Veröffentlichungsnummer: WO 2024/099739

(56) Entgegenhaltungen:
- EP-A1- 3 320 606
- EP-A1- 3 896 827
- WO-A1-2021/119819
- CN-A- 111 302 071

## Beschreibung

Die Erfindung betrifft ein Verfahren zum Betreiben eines Planarantriebssystems und ein Planarantriebssystem.

Diese Patentanmeldung beansprucht die Priorität der deutschen Patentanmeldung DE 10 2022 129 508.7.

Planarantriebssysteme können unter anderem in der Automatisierungstechnik, insbesondere der Fertigungstechnik, der Handhabungstechnik, der Verfahrenstechnik, der Verpackungstechnik und der Drucktechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanent erregten elektromagnetischen Planarmotor mit einem planaren Stator und einen auf dem Stator in mindestens zwei Richtungen beweglichen Läufer umfassen.

Bei einem permanent erregten elektromagnetischen Planarmotor wird dadurch eine Antriebskraft auf den Läufer ausgeübt, dass bestromte Spulenanordnungen eines Statormoduls mit Antriebsmagneten mehrerer Magnetanordnungen des Läufers magnetisch wechselwirken. Dabei können Spulenanordnungen zu Statoreinheiten zusammengefasst sein und das Statormodul kann eine Mehrzahl solcher Statoreinheiten aufweisen. Aus dem Stand der Technik sind Planarantriebssysteme mit rechteckigen und längsgestreckten Spulenanordnungen und rechteckigen und längsgestreckten Magnetanordnungen des Läufers bekannt. Ein solches Planarantriebssystem wird beispielsweise in der Offenlegungsschrift DE 10 2017 131 304 A1 beschrieben. Mit einem solchen Planarantriebssystem wird insbesondere eine lineare und translative Bewegung des Läufers möglich. Das bedeutet, dass mittels eines solchen Planarantriebssystems der Läufer oberhalb einer Statorfläche, unter der die rechteckigen und längsgestreckten Spulenanordnungen angeordnet sind, parallel zur Statorfläche frei beweglich und senkrecht zur Statorfläche zumindest in verschiedenen Abständen zur Statorfläche bewegt werden kann. Ferner ist ein solches Planarantriebssystem in der Lage, den Läufer um einige Grad zu kippen und um einige Grad zu rotieren. Die letztgenannten Bewegungen sind dabei oberhalb von beliebigen Punkten der Statorfläche durchführbar. Der Läufer kann insbesondere um bis zu 20° aus einer Normallage heraus rotiert werden.

Aus den Offenlegungsschriften DE 10 2016 224 951 A1 und DE 10 2018 209 403 A1 ist eine alternative technische Ausführung eines Planarantriebssystems bekannt. Bei diesem Planarantriebssystem wird eine kontrollierte Beförderung eines Läufers relativ zu einem Stator dadurch ermöglicht, dass eines der beiden Elemente über eine Vielzahl von zumindest teilweise beweglich angeordneten Stellmagneten verfügt, deren jeweilige Position und/oder Orientierung relativ zu diesem Element über Stellelemente in kontrollierter Weise vorgegeben werden kann, und das andere der beiden Elemente über zumindest zwei unbeweglich mit diesem Element verbundene Stationärmagnete verfügt, wobei die Stationärmagnete mit Stellmagneten magnetisch gekoppelt sind. Das Planarantriebssystem ist dazu eingerichtet, den Läufer relativ zum Stator durch eine kontrollierte Positionierung und/oder Orientierung von Stellmagneten zu befördern. Dabei umfasst das Befördern insbesondere, den zumindest einen Läufer in eine gewünschte Position und/oder Orientierung relativ zum Stator zu bringen. Die beweglich angeordneten Stellmagneten können dabei als Antriebselemente dienen. Stellgrößen für diese Antriebselemente können beispielsweise Rotationswinkel und/oder Rotationsgeschwindigkeiten der beweglich angeordneten Stellmagneten umfassen.

In der weiteren Beschreibung wird zunächst von einem Planarantriebssystem entsprechend der Offenlegungsschrift DE 10 2017 131 304 A1 ausgegangen, wobei die erfindungswesentlichen Merkmale ohne Weiteres auch auf ein Planarantriebssystem gemäß der DE 10 2016 224 951 A1 oder der DE 10 2018 209 403 A1 übertragbar sind.

Zur Steuerung eines Planarantriebssystems entsprechend der Offenlegungsschrift DE 10 2017 131 304 A1 dient eine Steuereinheit, die die vorgegebenen Trajektorien der Läufer in eine Bestromungsinformation der Spulenanordnungen umrechnet und anschließend ein Bestromen der Spulenanordnungen steuert. Dabei können mittels Positionssensoren ermittelte Ist-Positionen der Läufer zur Regelung der Ströme der Spulenanordnungen genutzt werden. Eingaben an das Planarantriebssystem und Ausgaben vom Planarantriebssystem erfolgen über die Steuereinheit. Die Steuereinheit kann beispielsweise eine Benutzerschnittstelle wie beispielsweise eine Tastatur, eine Computermaus und/oder einen Bildschirm zur Eingabe und zur Ausgabe von Informationen aufweisen.

Bei der Steuerung eines solchen Planarantriebssystems hat sich herausgestellt, dass die Steuereinheit aufgrund einer endlichen Rechenkapazität nur eine vorgegebene Anzahl von Statormodulen ansteuern und dabei die Positionen und Bewegungsbahnen einer vorgegebenen Anzahl von Läufern berücksichtigen kann. Beispielsweise kann die Steuereinheit einhundert Statormodule ansteuern und dabei beispielsweise Positionen von vierzig Läufern berücksichtigen.

Aus der EP 3 320 606 A1 ist ein Planarantriebssystem bekannt, das sich aus mehreren Teilsystemen zusammensetzt, deren Steuereinheiten (sector controller) eine kooperative Läufersteuerung ausführen. Aus der Menge der möglichen Sector Controller wird dabei ein sogenannter Principal Sector Controller zum Durchführen der Läufersteuerung bestimmt, der in der Regel der Sector Controller ist, auf dessen Teilsystem sich der Läufer aktuell. Der Principal Sector Controller kooperiert dabei mit den benachbarten Sector Controllern, in dem er mit diesen Positionsdaten austauscht. Die Rolle des Principal Sector Controllers kann dabei von einem Sector Controller auf einen anderen Sector Controller übergehen, insbesondere dann, wenn der Läufer von einem Teilsystem auf ein anderes Teilsystem verfahren wird.

Es ist eine Aufgabe der Erfindung, ein Verfahren zum Betreiben eines Planarantriebssystems bereitzustellen, bei dem eine größere Anzahl von Statormodulen und/oder eine größere Anzahl von Läufern verwendet werden können. Eine weitere Aufgabe der Erfindung ist es, ein Planarantriebssystem, bei dem eine größere Anzahl von Statormodulen und/oder eine größere Anzahl von Läufern verwendet werden können, bereitzustellen. Weitere Aufgaben der Erfindung sind, Steuereinheiten und Betriebsverfahren für diese Steuereinheiten bereitzustellen.

Diese Aufgaben werden mit den Gegenständen der unabhängigen Patentansprüche gelöst. Vorteilhafte Ausgestaltungen sind in den abhängigen Patentansprüchen angegeben.

Ein Planarantriebssystem weist ein erstes Planarantriebsteilsystem und ein zweites Planarantriebsteilsystem auf. Das erste Planarantriebsteilsystem weist erste Statormodule auf, die eine erste Statorfläche bilden. Die ersten Statormodule weisen erste Antriebselemente und erste Positionsdetektoren auf. Das erste Planarantriebsteilsystem weist ferner eine erste Steuereinheit auf, mit der die ersten Antriebselemente angesteuert und erste Messwerte der ersten Positionsdetektoren eingelesen werden können. Ferner kann die erste Steuereinheit dafür vorgesehen sein, die ersten Messwerte der ersten Positionsdetektoren auszuwerten und dadurch Läuferpositionen zu bestimmen. Das zweite Planarantriebsteilsystem weist zweite Statormodule auf, die eine zweite Statorfläche bilden. Die zweiten Statormodule weisen zweite Antriebselemente und zweite Positionsdetektoren auf. Das zweite Planarantriebsteilsystem weist ferner eine zweite Steuereinheit auf, mit der die zweiten Antriebselemente angesteuert und zweite Messwerte der zweiten Positionsdetektoren eingelesen werden können. Ferner kann die zweite Steuereinheit dafür vorgesehen sein, die zweite Messwerte der zweiten Positionsdetektoren auszuwerten und dadurch Läuferpositionen zu bestimmen. Die erste Steuereinheit und die zweite Steuereinheit können mittels einer Kommunikationsverbindung verbunden sein und Daten austauschen. Die erste Statorfläche grenzt an die zweite Statorfläche an. Dies kann insbesondere bedeuten, dass sich erste Statorfläche und zweite Statorfläche berühren. Es kann aber auch ein Spalt zwischen der ersten Statorfläche und der zweiten Statorfläche vorgesehen sein. Das Planarantriebssystem weist ferner zumindest einen Läufer auf, der mittels der ersten Antriebselemente und der zweiten Antriebselemente oberhalb der ersten Statorfläche beziehungsweise der zweiten Statorfläche in zumindest zwei Richtungen bewegbar ist. Der Läufer ist insbesondere durch eine Wechselwirkung der Antriebselemente mit Läufermagneten antreibbar. Die Antriebselemente können Spulenanordnungen umfassen. Dabei können Spulenanordnungen zu Statoreinheiten zusammengefasst sein. Das erste Statormodul kann eine Mehrzahl erster Statoreinheiten aufweisen. Das zweite Statormodul kann eine Mehrzahl zweiter Statoreinheiten aufweisen. Die Antriebselemente können die in der Offenlegungsschrift DE 10 2017 131 304 A1 beschriebenen Spulengruppen sein. Der Läufer kann die in dieser Offenlegungsschrift beschriebenen Magneteinheiten aufweisen. Alternativ können die Antriebselemente die in den Offenlegungsschriften DE 10 2016 224 951 A1 und DE 10 2018 209 403 A1 beschriebenen beweglich angeordneten Stellmagnete sein. Der Läufer kann die in diesen Offenlegungsschriften beschriebenen unbeweglichen Magnete aufweisen.

Nach einem ersten Aspekt betrifft die Erfindung ein Verfahren zum Betreiben eines solchen Planarantriebssystems, welches ermöglicht, den Läufer mit dem ersten Planarantriebsteilsystem und dem zweiten Planarantriebsteilsystem kooperierend anzutreiben. Hierzu umfasst das Verfahren zum Betreiben des Planarantriebssystems die folgenden Schritte:
- Auslösen einer Antriebskooperation anhand einer Randbedingung durch die erste Steuereinheit;
- Ausgabe eines Kooperationssignals an die zweite Steuereinheit durch die erste Steuereinheit;
- Empfang des Kooperationssignals durch die zweite Steuereinheit;
- Ausgabe der zweiten Messwerte an die erste Steuereinheit durch die zweite Steuereinheit;
- Empfang der zweiten Messwerte durch die erste Steuereinheit;
- Ermitteln von ersten Läuferpositionsdaten aus den ersten Messwerten und den zweiten Messwerten durch die erste Steuereinheit;
- Vergleich der ersten Läuferpositionsdaten mit ersten Läuferpositionssolldaten und Berechnung von einer ersten Stellgröße für eines der ersten Antriebselemente und/oder Berechnung von einer zweiten Stellgröße für eines der zweiten Antriebselemente anhand des Vergleichs der ersten Läuferpositionsdaten mit den ersten Läuferpositionssolldaten durch die erste Steuereinheit;
- Ausgabe der zweiten Stellgröße an die zweite Steuereinheit durch die erste Steuereinheit, falls die zweite Stellgröße berechnet wurde;
- Empfang der zweiten Stellgröße durch die zweite Steuereinheit;
- Betreiben des ersten Antriebselements mit der für das erste Antriebselement berechneten ersten Stellgröße durch die erste Steuereinheit;
- Betreiben des zweiten Antriebselements mit der für das zweite Antriebselement berechneten zweiten Stellgröße durch die zweite Steuereinheit.

Anstelle der Berechnung einer ersten Stellgröße kann auch eine Mehrzahl von ersten Stellgrößen für eine Mehrzahl der ersten Antriebselemente berechnet werden. Gegebenenfalls kann jeweils eine erste Stellgröße für alle ersten Antriebselemente berechnet werden. Anstelle der Berechnung einer zweiten Stellgröße kann auch eine Mehrzahl von zweiten Stellgrößen für eine Mehrzahl der zweiten Antriebselemente berechnet werden. Gegebenenfalls kann jeweils eine zweite Stellgröße für alle zweiten Antriebselemente berechnet werden. Im Folgenden kann bei einer als Stellgröße gewählten Formulierung immer auch davon ausgegangen werden, dass eine Mehrzahl von Stellgrößen vorgesehen ist oder umgekehrt.

Dem erfindungsgemäßen Verfahren zum Betreiben eines Planarantriebssystems liegt der Gedanke zugrunde, dass das erste Planarantriebsteilsystem und das zweite Planarantriebsteilsystem grundsätzlich Läufer autark steuern können. Für bestimmte Betriebszustände, wenn beispielsweise ein Läufer in einem Grenzbereich zwischen dem ersten Planarantriebsteilsystem und dem zweiten Planarantriebsteilsystem bewegt werden soll, wird der Läufer jedoch kooperierend angetrieben. Um dies zu ermöglichen, ist in diesem Verfahren die erste Steuereinheit für die Steuerung des Läufers zuständig. Die zweite Steuereinheit stellt jedoch die zweiten Messwerte der zweiten Positionsdetektoren zur Verfügung. Dies ermöglicht der ersten Steuereinheit, eine genaue Positionsbestimmung des Läufers durchzuführen, auch wenn sich der Läufer beispielsweise bereits zumindest teilweise oberhalb der zweiten Statorfläche befindet. Die zweite Stellgröße wird dabei insbesondere dann berechnet, wenn ein zweites Antriebselement für einen Antrieb des Läufers benötigt wird. Dies kann beispielsweise anhand der Läuferposition beurteilt werden. Insbesondere wenn die zweite Stellgröße ungleich Null ist, ist die zweite Stellgröße für den Antrieb des Läufers nötig. In diesem Fall muss das zweite Antriebselement betrieben werden, sodass ebenfalls eine Übertragung der entsprechenden zweiten Stellgröße erforderlich ist. Gleiches gilt auch, wenn gegebenenfalls mehr als ein zweites Antriebselement betrieben werden muss und deshalb mehr als eine zweite Stellgröße übertragen werden. Durch die Ausgabe der zweiten Stellgröße an die zweite Steuereinheit ist diese ferner in der Lage, das zweite Antriebselement oder die zweiten Antriebselemente derart zu betreiben, dass der Läufer auch vom zweiten Antriebselement oder von den zweiten Antriebselementen angetrieben werden kann. Die zweite Steuereinheit führt also keine eigene Steuerung durch, sondern betreibt das oder die zweiten Antriebselemente ausschließlich nach den empfangenen zweiten Stellgrößen. Falls die zweiten Stellgrößen zum Ansteuern des Läufers nicht benötigt werden, beispielsweise wenn sich der Läufer komplett oberhalb der ersten Statorfläche befindet, kann vorgesehen sein, dass die zweiten Stellgrößen trotzdem von der ersten Steuereinheit berechnet und ausgegeben werden. Ferner kann vorgesehen sein, dass die erste Steuereinheit in diesem Fall eine entsprechende Information ausgibt, anhand derer die zweite Steuereinheit erkennt, dass die zweiten Stellgrößen zum Ansteuern des Läufers nicht benötigt werden und deshalb auch keine berechnet wurden. Dadurch kann gegebenenfalls Übertragungskapazität eingespart werden.

Die Randbedingung kann dabei insbesondere beinhalten, dass sich ein Läufer einem Übergangsbereich zwischen der ersten Statorfläche und der zweiten Statorfläche nähert. Beispielsweise könnte die Randbedingung sein, dass der Läufer weniger als einen vorgegebenen Abstand zu einer Grenze zwischen dem ersten Planarantriebsteilsystem und dem zweiten Planarantriebsteilsystem aufweist. Ferner kann die Randbedingung alternativ oder zusätzlich umfassen, dass ein Läufer vom ersten Planarantriebsteilsystem auf das zweite Planarantriebsteilsystem transferiert werden soll. Die Antriebskooperation ermöglicht dann, die ersten Antriebselemente beziehungsweise zweiten Antriebselemente kooperierend zu betreiben und so einen gemeinsamen Antrieb des Läufers über beide Planarantriebsteilsysteme bereitzustellen. Ferner kann vorgesehen sein, dass die erste Steuereinheit die Antriebskooperation nur dann auslösen kann, wenn sich der Läufer oberhalb der ersten Statorfläche befindet.

Nach einem zweiten Aspekt betrifft die Erfindung ein Verfahren zum Betreiben einer ersten Steuereinheit eines Planarantriebssystems entsprechend dem ersten Aspekt mit den folgenden Schritten:
- Auslösen einer Antriebskooperation anhand einer Randbedingung;
- Ausgabe eines Kooperationssignals an eine zweite Steuereinheit;
- Empfang der zweiten Messwerte durch die erste Steuereinheit;
- Ermitteln von ersten Läuferpositionsdaten aus den ersten Messwerten und den zweiten Messwerten;
- Empfang der zweiten Messwerte von der zweiten Steuereinheit;
- Vergleich der ersten Läuferpositionsdaten mit ersten Läuferpositionssolldaten und Berechnung von einer ersten Stellgröße für eines der ersten Antriebselemente und/oder Berechnung von einer zweiten Stellgröße für eines der zweiten Antriebselemente anhand des Vergleichs der ersten Läuferpositionsdaten mit den ersten Läuferpositionssolldaten;
- Ausgabe der zweiten Stellgröße an die zweite Steuereinheit, falls die zweiten Stellgröße berechnet wurde;
- Betreiben des ersten Antriebselements mit der für das erste Antriebselement berechneten ersten Stellgröße.

Das Verfahren zum Betreiben der ersten Steuereinheit beinhaltet also alle Verfahrensschritte des Verfahrens zum Betreiben des Planarantriebssystems, die von der ersten Steuereinheit ausgeführt werden. Insbesondere erfolgen die Berechnungen hinsichtlich Läuferposition und Betrieb des oder der Antriebselemente durch die erste Steuereinheit.

Nach einem dritten Aspekt betrifft die Erfindung eine erste Steuereinheit für ein erstes Planarantriebsteilsystem, die eingerichtet ist, das erfindungsgemäße Verfahren zum Betreiben der ersten Steuereinheit entsprechend dem zweiten Aspekt durchzuführen.

Nach einem vierten Aspekt betrifft die Erfindung ein Verfahren zum Betreiben einer zweiten Steuereinheit eines Planarantriebssystems entsprechend dem ersten Aspekt mit den folgenden Schritten:
- Empfang eines Kooperationssignals;
- Ausgabe der zweiten Messwerte an die erste Steuereinheit;
- Empfang von einer zweiten Stellgröße;
- Betreiben des zweiten Antriebselements mit der für das zweite Antriebselement berechneten zweiten Stellgröße durch die zweite Steuereinheit.

Das Verfahren zum Betreiben der zweiten Steuereinheit beinhaltet also alle Verfahrensschritte des Verfahrens zum Betreiben des Planarantriebssystems, die von der zweiten Steuereinheit ausgeführt werden. Die zweite Steuereinheit gibt insbesondere die zweiten Messwerte weiter an die erste Steuereinheit und empfängt die zweiten Stellgröße für das zweite Antriebselement und betreibt dieses mit der zweiten Stellgröße.

Nach einem fünften Aspekt betrifft die Erfindung eine zweite Steuereinheit für ein zweites Planarantriebsteilsystem, die eingerichtet ist, das erfindungsgemäße Verfahren zum Betreiben der zweiten Steuereinheit entsprechend dem vierten Aspekt durchzuführen.

Nach einem sechsten Aspekt betrifft die Erfindung ein Planarantriebssystem. Das Planarantriebssystem weist ein erstes Planarantriebsteilsystem und ein zweites Planarantriebsteilsystem auf. Das erste Planarantriebsteilsystem weist erste Statormodule mit ersten Statoreinheiten auf, die eine erste Statorfläche bilden. Die ersten Statormodule weisen erste Antriebselemente und erste Positionsdetektoren auf. Das erste Planarantriebsteilsystem weist ferner die erfindungsgemäße erste Steuereinheit gemäß dem dritten Aspekt auf, mit der die ersten Antriebselemente angesteuert werden können. Ferner kann die erste Steuereinheit dafür vorgesehen sein, die ersten Positionsdetektoren auszuwerten und dadurch Läuferpositionen zu bestimmen. Das zweite Planarantriebsteilsystem weist zweite Statormodule mit zweiten Statoreinheiten auf, die eine zweite Statorfläche bilden. Die zweiten Statormodule weisen zweite Antriebselemente und zweite Positionsdetektoren auf. Das zweite Planarantriebsteilsystem weist ferner die erfindungsgemäße zweite Steuereinheit gemäß dem fünften Aspekt auf, mit der die zweiten Antriebselemente angesteuert werden können. Ferner kann die zweite Steuereinheit dafür vorgesehen sein, die zweiten Positionsdetektoren auszuwerten und dadurch Läuferpositionen zu bestimmen. Die erste Steuereinheit und die zweite Steuereinheit können mittels einer Kommunikationsverbindung verbunden sein und Daten austauschen. Die erste Statorfläche grenzt an die zweite Statorfläche an. Dies kann insbesondere bedeuten, dass sich erste Statorfläche und zweite Statorfläche berühren. Es kann aber auch ein Spalt zwischen der ersten Statorfläche und der zweiten Statorfläche vorgesehen sein. Das Planarantriebssystem weist ferner zumindest einen Läufer auf, der mittels der ersten Antriebselemente und der zweiten Antriebselemente oberhalb der ersten Statorfläche beziehungsweise der zweiten Statorfläche in zumindest zwei Richtungen bewegbar ist. Die Antriebselemente können die in der Offenlegungsschrift DE 10 2017 131 304 A1 beschriebenen Spulengruppen sein. Der Läufer kann die in dieser Offenlegungsschrift beschriebenen Magneteinheiten aufweisen. Alternativ können die Antriebselemente die in den Offenlegungsschriften DE 10 2016 224 951 A1 und DE 10 2018 209 403 A1 beschriebenen beweglich angeordneten Stellmagnete sein. Der Läufer kann die in diesen Offenlegungsschriften beschriebenen unbeweglichen Magnete aufweisen.

Im Folgenden werden Ausführungsformen des Verfahrens zum Betreiben des Planarantriebssystems gemäß dem ersten Aspekt beschrieben. Die Verfahrensschritte, die jeweils die erste Steuereinheit oder die zweite Steuereinheit betreffen, können jeweils ebenso optional im erfindungsgemäßen Verfahren zum Betreiben der ersten Steuereinheit gemäß dem zweiten Aspekt beziehungsweise im erfindungsgemäßen Verfahren zum Betreiben der zweiten Steuereinheit gemäß dem vierten Aspekt vorgesehen werden. Es kann jeweils vorgesehen sein, dass eine einzelne erste Stellgröße berechnet und entsprechend verwendet wird. Alternativ können auch jeweils mehrere erste Stellgrößen berechnet und verwendet werden. Gleiches gilt für die zweiten Stellgrößen. Ist im Folgenden eine einzelne Stellgröße genannt, sollen die Ausführungen analog auch immer für mehrere der entsprechenden Stellgrößen gelten und umgekehrt.

In einer Ausführungsform des Verfahrens zum Betreiben des Planarantriebssystems werden die Schritte:
- Ausgabe der zweiten Messwerte an die erste Steuereinheit durch die zweite Steuereinheit;
- Empfang der zweiten Messwerte durch die erste Steuereinheit;
- Ermitteln von ersten Läuferpositionsdaten aus den ersten Messwerten und den zweiten Messwerten durch die erste Steuereinheit;
- Vergleich der ersten Läuferpositionsdaten mit ersten Läuferpositionssolldaten und Berechnung von einer ersten Stellgröße für eines der ersten Antriebselemente und/oder Berechnung von einer zweiten Stellgröße für eines der zweiten Antriebselemente durch die erste Steuereinheit;
- Ausgabe der zweiten Stellgröße an die zweite Steuereinheit durch die erste Steuereinheit, falls die zweiten Stellgröße berechnet wurde;
- Empfang der zweiten Stellgröße durch die zweite Steuereinheit;
- Betreiben des ersten Antriebselements mit der für das erste Antriebselement berechneten ersten Stellgröße durch die erste Steuereinheit;
- Betreiben des zweiten Antriebselements mit der für das zweite Antriebselement berechneten zweiten Stellgröße durch die zweite Steuereinheit;
zyklisch wiederholt.

Dieses zyklische Wiederholen kann beispielsweise mit einer vorgegebenen Zykluszeit durchgeführt werden, wobei die vorgegebene Zykluszeit kleiner als eine Millisekunde, insbesondere kleiner als eine halbe Millisekunde, ist und beispielsweise 250 Mikrosekunden betragen kann. Mit einer Zykluszeit in diesem Bereich kann beispielsweise die erste Steuereinheit des ersten Planarantriebsteilsystems einhundert erste Statormodule ansteuern und vierzig Läufer oberhalb der ersten Statorfläche kontrollieren. Die zweite Steuereinheit des zweiten Planarantriebsteilsystems kann einhundert zweite Statormodule ansteuern und vierzig Läufer oberhalb der zweiten Statorfläche kontrollieren.

In einer Ausführungsform des Verfahrens zum Betreiben des Planarantriebssystems werden ferner die folgenden Schritte ausgeführt:
- Ausgabe der ersten Messwerte an die zweite Steuereinheit durch die erste Steuereinheit;
- Empfang der ersten Messwerte durch die zweite Steuereinheit;
- Ermitteln von zweiten Läuferpositionsdaten aus den zweiten Messwerten und den ersten Messwerten durch die zweite Steuereinheit;
- Vergleich der zweiten Läuferpositionsdaten mit zweiten Läuferpositionssolldaten und Berechnung von einer ersten redundanten Stellgröße für eines der ersten Antriebselemente und/oder Berechnung von einer zweiten redundanten Stellgröße für eines der zweiten Antriebselemente durch die zweite Steuereinheit;
- Ausgabe der ersten redundanten Stellgröße an die erste Steuereinheit durch die zweite Steuereinheit;
- Empfang der ersten redundanten Stellgröße durch die erste Steuereinheit.

Dadurch ist es möglich, dass eine Läuferposition sowohl von der ersten Steuereinheit als auch von der zweiten Steuereinheit berechnet wird. Ferner wird die erste Stellgröße beziehungsweise die zweite Stellgröße von der ersten Steuereinheit berechnet und die erste redundante Stellgröße beziehungsweise zweite redundante Stellgröße von der zweiten Steuereinheit berechnet. Dies ermöglicht, gegebenenfalls eine Kontrolle des Läufers von der ersten Steuereinheit an die zweite Steuereinheit zu übergeben. Insbesondere kann durch diese redundante Berechnung erreicht werden, dass die zweite Steuereinheit gegebenenfalls ohne wesentliche Verzögerung die Kontrolle des Läufers übernehmen kann, da durch das Berechnen der ersten redundanten Stellgröße beziehungsweise zweiten redundanten Stellgröße für die zweite Steuereinheit bereits alle relevanten Informationen vorliegen. Dies kann beispielsweise ein Planarantriebssystem und ein Betriebsverfahren eines solchen ermöglichen, in dem Läufer vom ersten Planarantriebsteilsystem an das zweite Planarantriebsteilsystem übergeben werden. Ferner wird dadurch ebenfalls ermöglicht, Fehler bei der Berechnung der Stellgrößen zu erkennen, da für den Fall das die erste Stellgröße von der ersten redundanten Stellgröße abweicht beziehungsweise die zweite Stellgröße von der zweiten redundanten Stellgröße abweicht, es gegebenenfalls nicht möglich ist, eine Kontrolle des Läufers von der ersten Steuereinheit an die zweite Steuereinheit zu übergeben. In diesem Fall kann die Kontrolle beispielsweise bei der ersten Steuereinheit belassen werden, bis die Stellgrößen mit ihren redundanten Stellgrößen übereinstimmen.

In einer Ausführungsform des Verfahrens zum Betreiben des Planarantriebssystems ist das Kooperationssignal ein Transfersignal. Nach dem Empfang des Transfersignals wird durch die zweite Steuereinheit überprüft, ob ein Läufertransfer möglich ist. Für den Fall, dass ein Läufertransfer möglich ist, wird eine Bestätigung an die erste Steuereinheit ausgegeben. Für den Fall, dass kein Läufertransfer möglich ist, wird eine Fehlermeldung an die erste Steuereinheit ausgegeben. Dadurch kann die zweite Steuereinheit den Läufertransfer ablehnen oder dem Läufertransfer zustimmen. Insbesondere kann dabei berücksichtigt werden, ob die zweite Steuereinheit in der Lage ist, eine Kontrolle über den Läufer auszuüben und die Stellgrößen entsprechend zu berechnen. Diese Schritte können insbesondere von der zweiten Steuereinheit durchgeführt werden.

In einer Ausführungsform des Verfahrens zum Betreiben des Planarantriebssystems überprüft die zweite Steuereinheit, ob ein Läufertransfer möglich ist, indem eine freie Rechenkapazität der zweiten Steuereinheit ausgewertet wird. Dies kann beispielsweise nach einer aktuellen CPU-Auslastung und/oder Speicherauslastung erfolgen. Ferner kann auch eine Anzahl an möglichen Läufern vorgegeben sein, beispielsweise die weiter oben genannte Zahl von vierzig Läufern. Kann nach diesen Kriterien ein weiterer Läufer kontrolliert werden, wird die Bestätigung ausgegeben, ansonsten die Fehlermeldung. Diese Schritte können insbesondere von der zweiten Steuereinheit durchgeführt werden.

In einer Ausführungsform des Verfahrens zum Betreiben des Planarantriebssystems findet ein Läuferübergang vom ersten Planarantriebsteilsystem auf das zweite Planarantriebsteilsystem und ein Kontrollübergang von der ersten Steuereinheit auf die zweite Steuereinheit statt. Nach dem Kontrollübergang werden folgende Schritte durchgeführt:
- Ausgabe der ersten Messwerte an die zweite Steuereinheit durch die erste Steuereinheit;
- Empfang der ersten Messwerte durch die zweite Steuereinheit;
- Ermitteln von zweiten Läuferpositionsdaten aus den ersten Messwerten und den zweiten Messwerten durch die zweite Steuereinheit;
- Vergleich der zweiten Läuferpositionsdaten mit zweiten Läuferpositionssolldaten und Berechnung von einer ersten Stellgröße für eines der ersten Antriebselemente und/oder Berechnung von einer zweiten Stellgröße für eines der zweiten Antriebselemente durch die zweite Steuereinheit;
- Ausgabe der ersten Stellgröße an die erste Steuereinheit durch die zweite Steuereinheit, falls die erste Stellgröße berechnet wurde;
- Empfang der erste Stellgröße durch die erste Steuereinheit;
- Betreiben des ersten Antriebselements mit der für das erste Antriebselement berechneten ersten Stellgröße durch die erste Steuereinheit;
- Betreiben des zweiten Antriebselements mit der für das zweite Antriebselement berechneten zweiten Stellgröße durch die zweite Steuereinheit.

Nach dem Kontrollübergang werden die für die Ansteuerung der Antriebselemente notwendigen Berechnungen also von der zweiten Steuereinheit übernommen. Die erste Steuereinheit stellt hierzu die Messwerte der ersten Positionssensoren zur Verfügung und empfängt die erste Stellgröße von der zweiten Steuereinheit. Mit diesem Verfahren kann also erreicht werden, dass Läufer zwischen den Planarantriebsteilsystemen wechseln. Auch hier kann vorgesehen sein, dass durch die zweite Steuereinheit eine Mehrzahl von ersten Stellgrößen und/oder eine Mehrzahl von zweiten Stellgrößen berechnet wird und die Mehrzahl der zweiten Stellgrößen an die erste Steuereinheit ausgegeben wird. Die erste Stellgröße beziehungsweise die ersten Stellgrößen werden dabei insbesondere dann berechnet, wenn sie zum Antreiben des Läufers notwendig sind.

In einer Ausführungsform des Verfahrens zum Betreiben des Planarantriebssystems werden die Schritte:
- Ausgabe der ersten Messwerte an die zweite Steuereinheit durch die erste Steuereinheit;
- Empfang der ersten Messwerte durch die zweite Steuereinheit;
- Ermitteln von zweiten Läuferpositionsdaten aus den zweiten Messwerten und den ersten Messwerten durch die zweite Steuereinheit;
- Vergleich der zweiten Läuferpositionsdaten mit zweiten Läuferpositionssolldaten und Berechnung von einer ersten Stellgröße für eines der ersten Antriebselemente und/oder Berechnung von einer zweiten Stellgröße für eines der zweiten Antriebselemente durch die zweite Steuereinheit;
- Ausgabe der ersten Stellgröße an die erste Steuereinheit durch die zweite Steuereinheit, falls die erste Stellgröße berechnet wurde;
- Empfang der ersten Stellgröße durch die erste Steuereinheit;
- Betreiben des ersten Antriebselements mit der für das erste Antriebselement berechneten ersten Stellgröße durch die erste Steuereinheit;
- Betreiben des zweiten Antriebselements mit der für das zweite Antriebselement berechneten zweiten Stellgröße durch die zweite Steuereinheit;
zyklisch wiederholt.

Dieses zyklische Wiederholen kann beispielsweise ebenfalls mit einer vorgegebenen Zykluszeit durchgeführt werden wie weiter oben bereits beschrieben.

In einer Ausführungsform des Verfahrens zum Betreiben des Planarantriebssystems weist dieses ferner die nach dem Kontrollübergang durchgeführten folgenden Schritte auf:
- Ausgabe der zweiten Messwerte an die erste Steuereinheit durch die zweite Steuereinheit;
- Empfang der zweiten Messwerte durch die erste Steuereinheit;
- Ermitteln von ersten Läuferpositionsdaten aus den ersten Messwerten und den zweiten Messwerten durch die erste Steuereinheit;
- Vergleich der ersten Läuferpositionsdaten mit ersten Läuferpositionssolldaten und Berechnung von einer ersten redundanten Stellgröße für eines der ersten Antriebselemente und/oder Berechnung von einer zweiten redundanten Stellgröße für eines der zweiten Antriebselemente durch die erste Steuereinheit;
- Ausgabe der zweiten redundanten Stellgröße an die zweite Steuereinheit durch die erste Steuereinheit;
- Empfang der zweiten redundanten Stellgröße durch die zweite Steuereinheit.

Die erste Steuereinheit kann also weiter redundant die entsprechenden Stellgrößen berechnen. Dies kann so lange erfolgen, bis der Läufertransfer komplett abgeschlossen ist. Insbesondere kann ein Terminierungssignal für die erste Steuereinheit vorgesehen sein, dass der ersten Steuereinheit signalisiert, dass der Läufertransfer abgeschlossen ist. Das Terminierungssignal kann dabei beispielsweise von der zweiten Steuereinheit erzeugt werden, beispielsweise dann, wenn die zweite Steuereinheit erkennt, dass weder Messwerte der ersten Läuferpositionsdaten weiter notwendig sind, noch, dass die ersten Antriebselemente für den Antrieb des Läufers benötigt werden. In diesem Fall kann die zweite Steuereinheit das Terminierungssignal an die erste Steuereinheit ausgeben. Die erste Steuereinheit empfängt das Terminierungssignal und stellt die Weitergabe der ersten Messwerte der ersten Positionsdetektoren ein.

In einer Ausführungsform des Verfahrens zum Betreiben des Planarantriebssystems werden läuferspezifische Daten zwischen der ersten Steuereinheit und der zweiten Steuereinheit übertragen. Die läuferspezifischen Daten können dabei unter anderem beispielsweise eine Masse und/oder eine Beladung und/oder eine Information über auf dem Läufer angeordnete Objekte beinhalten. Die läuferspezifischen Daten können ferner eine Bezeichnung für den Läufer und/oder spezifische, für den Läufer zu verwendende Steuerungseinstellungen beinhalten.

Es kann vorgesehen sein, dass das Planarantriebssystem eine Zentralsteuereinheit aufweist. Die Zentralsteuereinheit kann insbesondere eingerichtet sein, eine Steuerung des gesamten Planarantriebssystems bereitzustellen, wobei die Zentralsteuereinheit aktuelle Läuferpositionen betrachtet und ferner Sollpositionen für die Läufer an die erste Steuereinheit beziehungsweise die zweite Steuereinheit ausgibt. Die für die Bewegung von der aktuellen Läuferpositionen zur Sollposition des Läufers notwendigen Stellgrößen der Antriebselemente werden jedoch weiterhin von der ersten Steuereinheit beziehungsweise der zweiten Steuereinheit berechnet. In einer Ausführungsform des Verfahrens zum Betreiben des Planarantriebssystems empfängt die Zentralsteuereinheit erste Läuferpositionsdaten von der ersten Steuereinheit und zweite Läuferpositionsdaten von der zweiten Steuereinheit. Die Zentralsteuereinheit gibt ferner einen Kooperationsbefehl an die erste Steuereinheit aus, wobei der Kooperationsbefehl eine Randbedingung darstellt. In diesem Fall weist also die Zentralsteuereinheit die erste Steuereinheit an, die Antriebskooperation durchzuführen und das Kooperationssignal auszugeben. Beispielsweise kann die Zentralsteuereinheit anhand der ersten Läuferpositionsdaten beziehungsweise zweiten Läuferpositionsdaten erkennen, dass eine Antriebskooperation notwendig ist, beispielsweise da ein Läufertransfer stattfinden soll. Dies kann so an die ersten und/oder zweiten Steuereinheiten kommuniziert werden, sodass diese die für das erfindungsgemäße Verfahren notwendigen Schritte ausführen.

In einer Ausführungsform des Verfahrens zum Betreiben des Planarantriebssystems fragt die Zentralsteuereinheit bei der zweiten Steuereinheit ab, ob ein Läufertransfer möglich ist. Die zweite Steuereinheit überprüft, ob ein Läufertransfer möglich ist, wobei für den Fall, dass ein Läufertransfer möglich ist, eine Bestätigung an die Zentralsteuereinheit ausgegeben wird und für den Fall, dass kein Läufertransfer möglich ist, eine Fehlermeldung an die Zentralsteuereinheit ausgegeben wird. Anschließend kann vorgesehen sein, dass die Zentralsteuereinheit einen entsprechenden Kooperationsbefehl an die erste Steuereinheit ausgibt. Es kann vorgesehen sein, dass die erste Steuereinheit trotzdem als Kooperationssignal das Transfersignal ausgibt. In diesem Fall kann es vorgesehen sein, dass die zweite Steuereinheit keine weitere Überprüfung, ob ein Läufertransfer möglich ist, vornimmt.

In einer Ausführungsform des Verfahrens zum Betreiben des Planarantriebssystems kann vorgesehen sein, dass die Zentralsteuereinheit anhand der ersten Läuferpositionsdaten und der zweiten Läuferpositionsdaten erkennt, dass der Läufertransfer abgeschlossen ist und ein Terminierungssignal an die erste Steuereinheit und/oder die zweite Steuereinheit ausgibt.

In einer Ausführungsform des Verfahrens zum Betreiben des Planarantriebssystems gibt die Zentralsteuereinheit einen Kontrollübergabebefehl an die erste Steuereinheit und/oder die zweite Steuereinheit aus. Ein Kontrollübergang wird anhand des Kontrollübergabebefehls durchgeführt. Dies kann beispielsweise dann erfolgen, wenn die Zentralsteuereinheit erkennt, dass ein Kontrollübergang und ein Läufertransfer notwendig sind, wenn der Läufer eine Sollposition erreichen soll.

In einer Ausführungsform des Verfahrens zum Betreiben des Planarantriebssystems gibt die Zentralsteuereinheit erste Läuferpositionssolldaten an die erste Steuereinheit und/oder zweite Läuferpositionssolldaten an die zweite Steuereinheit aus. Die erste Steuereinheit kann die Stellgrößen anhand der ersten Läuferpositionssolldaten berechnen. Die zweite Steuereinheit kann die Stellgrößen anhand der zweiten Läuferpositionssolldaten berechnen. In diesem Fall kontrolliert die Zentralsteuereinheit die Positionen der Läufer des Planarantriebssystems.

In einer Ausführungsform des Verfahrens zum Betreiben des Planarantriebssystems werden läuferspezifische Daten zwischen der Zentralsteuereinheit und der ersten Steuereinheit beziehungsweise der zweiten Steuereinheit übertragen. Die läuferspezifischen Daten können dabei den bereits weiter oben beschriebenen läuferspezifischen Daten entsprechen.

In einer Ausführungsform des Verfahrens zum Betreiben des Planarantriebssystems wird die Antriebskooperation gestartet, wenn sich ein Läufer innerhalb eines vorgegebenen Abstandes zu einem Randbereich des ersten Planarantriebsteilsystems befindet.

Die Erfindung wird anhand der beigefügten Figuren näher erläutert. Hierbei zeigen in jeweils schematischer Darstellung:
- Fig. 1: einen Querschnitt durch ein Planarantriebssystem;
- Fig. 2: eine Draufsicht auf das Planarantriebssystem der Fig. 1;
- Fig. 3: eine weitere Draufsicht auf das Planarantriebssystem der Fig. 1 und 2;
- Fig. 4: ein Ablaufdiagramm eines Verfahrens zum Betreiben eines Planarantriebssystems;
- Fig. 5: eine weitere Draufsicht auf das Planarantriebssystem der Fig. 1, 2 und 3;
- Fig. 6: eine weitere Draufsicht auf das Planarantriebssystem der Fig. 1, 2, 3 und 5;
- Fig. 7: ein weiteres Ablaufdiagramm des Verfahrens zum Betreiben des Planarantriebssystems mit weiteren optionalen Schritten;
- Fig. 8: eine weitere Draufsicht auf das Planarantriebssystem der Fig. 1, 2, 3, 5 und 6;
- Fig. 9: eine Draufsicht auf ein weiteres Planarantriebssystem;
- Fig. 10: eine Draufsicht auf ein weiteres Planarantriebssystem;
- Fig. 11: eine Draufsicht auf ein weiteres Planarantriebssystem; und
- Fig. 12: eine Draufsicht auf ein weiteres Planarantriebssystem.

Im Folgenden können für gleiche Merkmale gleiche Bezugszeichen verwendet werden. Weiter kann es aus Gründen der Übersichtlichkeit vorgesehen sein, dass nicht in jeder Figur sämtliche Elemente gezeigt sind. Weiter kann es der Übersicht halber vorgesehen sein, dass nicht in jeder Zeichnung jedes Element mit einem eigenen Bezugszeichen versehen ist.

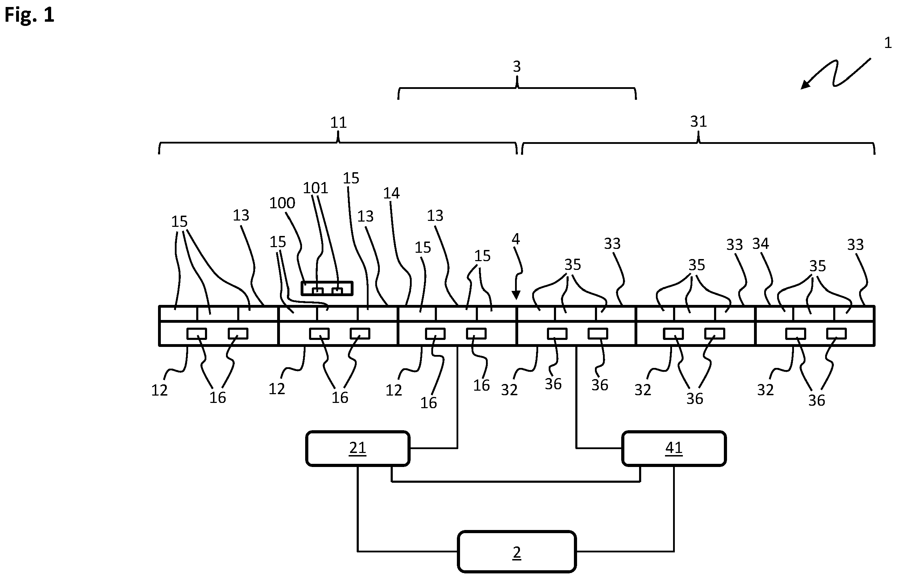

Figur 1 zeigt ein Planarantriebssystem 1 mit einem ersten Planarantriebsteilsystem 11 und einem zweiten Planarantriebsteilsystem 31. Das erste Planarantriebsteilsystem 11 weist erste Statormodule 12 auf. Optional sind erste Statoreinheiten 13 vorgesehen, die in den ersten Statormodulen 12 angeordnet sind. Die ersten Statormodule 12 bilden eine erste Statorfläche 14. Die ersten Statormodule 12 weisen erste Antriebselemente 15 und erste Positionsdetektoren 16 auf. Die ersten Antriebselemente 15 können die in der Offenlegungsschrift DE 10 2017 131 304 A1 beschriebenen Spulengruppen sein. Insbesondere können die Antriebselemente 15 jeweils ein bestrombares Dreiphasensystem umfassen.

Dann kann mit den ersten Antriebselementen 15 ein elektromagnetisches Wanderfeld erzeugt werden. Alternativ können die Antriebselemente die in den Offenlegungsschriften DE 10 2016 224 951 A1 und DE 10 2018 209 403 A1 beschriebenen beweglich angeordneten Stellmagnete sein. Der Läufer kann die in diesen Offenlegungsschriften beschriebenen unbeweglichen Magnete aufweisen. Die ersten Positionsdetektoren 16 können beispielsweise Magnetfeldsensoren, insbesondere Hall-Sensoren, insbesondere 3D-Hall-Sensoren sein. Eine mögliche Anordnung der ersten Positionsdetektoren 16 in den ersten Statormodulen kann beispielsweise der Offenlegungsschrift DE 10 2017 131 320 A1 entnommen werden. Insbesondere kann vorgesehen sein, dass eine Vielzahl von ersten Positionsdetektoren 16 innerhalb eines ersten Statormoduls 12 vorgesehen sind, insbesondere mehr als zwanzig erste Positionsdetektoren 16 und bevorzugt mehr als vierzig erste Positionsdetektoren 16. Die ersten Positionsdetektoren 16 können insbesondere als Magnetfeldsensoren ausgestaltet sein. Die ersten Positionsdetektoren 16 sind hier auf einem Sensormodul angeordnet. Das Sensormodul weist einen Träger und eine zweidimensionale Anordnung von Magnetfeldsensoren auf, wobei jeder Magnetfeldsensor einem der ersten Positionsdetektoren 16 entspricht. Die Magnetfeldsensoren sind auf dem Träger angeordnet. Die zweidimensionale Anordnung von Magnetfeldsensoren weist eine erste Teilanordnung von Magnetfeldsensoren und eine zweite Teilanordnung von Magnetfeldsensoren auf. Die Magnetfeldsensoren der ersten Teilanordnung sind in einem ersten periodischen Gitter angeordnet. Die Magnetfeldsensoren im ersten periodischen Gitter sind entlang einer ersten Richtung und entlang einer zweiten Richtung angeordnet. Benachbarte Magnetfeldsensoren der ersten Teilanordnung in der ersten Richtung sind in einem ersten Abstand zueinander angeordnet. Benachbarte Magnetfeldsensoren der ersten Teilanordnung in der zweiten Richtung sind in einem zweiten Abstand zueinander angeordnet. Die Magnetfeldsensoren der zweiten Teilanordnung sind in einem zweiten periodischen Gitter angeordnet. Die Magnetfeldsensoren im zweiten periodischen Gitter sind entlang der ersten Richtung und entlang der zweiten Richtung angeordnet. Benachbarte Magnetfeldsensoren der zweiten Teilanordnung sind in der ersten Richtung im ersten Abstand zueinander angeordnet und in der zweiten Richtung im zweiten Abstand zueinander angeordnet. Die erste Teilanordnung und die zweite Teilanordnung sind zueinander um einen Vektor verschoben angeordnet. Der Vektor weist eine erste Komponente in der ersten Richtung und eine zweite Komponente in der zweiten Richtung auf. Die erste Komponente ist kleiner als der erste Abstand. Die zweite Komponente ist kleiner als der zweite Abstand. Der Läufer 100 weist als Läuferantriebselement 101 beispielsweise eine erste Magneteinheit mit einer ersten periodischen Anordnung von Magneten mit einer ersten Periodenlänge auf. Ferner weist der Läufer 100 eine zweite Magneteinheit mit einer zweiten periodischen Anordnung von Magneten mit einer zweiten Periodenlänge auf. Die erste periodische Anordnung von Magneten ist in der ersten Richtung periodisch. Die zweite Anordnung von Magneten ist in der zweiten Richtung periodisch. Während des Betriebs des Planarantriebssystems 1 ist die erste Magneteinheit in der ersten Richtung ausgerichtet und die zweite Magneteinheit in der zweiten Richtung ausgerichtet. Die erste Komponente ist kleiner als die erste Periodenlänge. Eine Differenz aus dem ersten Abstand und der ersten Komponente ist ebenfalls kleiner als die erste Periodenlänge. Die zweite Komponente ist kleiner als die zweite Periodenlänge. Eine Differenz aus dem zweiten Abstand und der zweiten Komponente ist ebenfalls kleiner als die zweite Periodenlänge. Um die Position des Läufers 100 im Planarantriebssystem 1 aus den einzelnen Messwerten der Positionsdetektoren zu erfassen, ist es notwendig, dass eine genügend große Anzahl von Magnetfeldsensoren innerhalb des Sensormoduls vorgesehen ist. Dadurch ist es möglich, dass immer eine genügende Anzahl von Magnetfeldsensoren in einer Umgebung des Läufers 100 zur Verfügung stehen, um eine genaue Position des Läufers 100 ermitteln zu können. Andererseits müssen die Messdaten der Magnetfeldsensoren ausgewertet werden, weswegen eine möglichst geringe Anzahl von Magnetfeldsensoren vorgesehen werden soll, da dadurch eine benötigte Rechenleistung verringert werden kann. Mit der Anordnung der Magnetfeldsensoren der Positionserfassungseinheit in zwei periodischen Gittern, wobei die Gitter identisch aufgebaut und zueinander verschoben sind, werden einerseits genügend Magnetfeldsensoren bereitgestellt, um die Position des Läufers 100 ermitteln zu können. Andererseits ist die Anzahl der Magnetfeldsensoren so gering, dass die benötige Rechenleistung bei der Auswertung während der Erfassung der Position des Läufers 100 verringert ist. Aus der DE 10 2020 115 449 A1 ist weiterhin ein Verfahren bekannt, bei dem Positionsdetektoren von benachbarten Statormodulen zur Erfassung einer Position eines Läufers 100 genutzt werden können. Hierbei wird unter anderem ein Sensormuster der Magnetfeldsensoren des Sensormoduls in einem Sensormusterbestimmungsschritt bestimmt, wobei ein Sensormuster eine Teilmenge der Magnetfeldsensoren des Sensormoduls des Statormoduls umfasst. Hierdurch wird der technische Vorteil erreicht, dass ein Verfahren zum Steuern eines Planarantriebssystems 1 bereitgestellt werden kann, bei dem für eine Positionsbestimmung des Läufers 100 auf dem Statormodul des Planarantriebssystems 1 ausschließlich relevante Magnetfeldsensoren des Sensormoduls des Statormoduls ausgewählt werden. Dies gilt dann selbstverständlich auch bei einem Übergang des Läufers 100 von einem Statormodul auf ein anderes Statormodul und insbesondere auch beim Übergang von einem Planarantriebsteilsystem auf ein anderes Planarantriebsteilsystem. Insbesondere kann durch ein derartiges Verfahren eine Auswahl getroffen werden, von welchen Positionsdetektoren Messwerte von einer Steuereinheit auf eine andere Steuereinheit übertragen werden, was insgesamt die zu übertragene Datenmenge verringert. In Bezug auf den Aufbau und die Funktionsweise der Positionserfassung mittels der Positionsdetektoren wird insbesondere auf die DE 10 2017 131 320 A1 und die DE 10 2020 115 449 A1 verwiesen, deren Inhalt durch Rückbezug vollumfänglich in die vorliegende Anmeldung übernommen wird.

Das Planarantriebssystem 1 weist ferner zumindest einen Läufer 100 auf, der mittels der ersten Antriebselemente 15 oberhalb der ersten Statorfläche 14 in zumindest zwei Richtungen parallel zur ersten Statorfläche 14 bewegbar ist. Ferner kann auch vorgesehen sein, dass der Läufer 100 senkrecht zur ersten Statorfläche 14 bewegbar ist, relativ zur ersten Statorfläche 14 verkippt werden kann und um eine Achse senkrecht zur ersten Statorfläche 14 rotiert werden kann. Der Läufer 100 ist in Fig. 1 oberhalb der ersten Statorfläche 14 angeordnet. Insbesondere weist der Läufer 100 hierzu Läuferantriebselemente 101 auf. Die Läuferantriebselemente 101 können dabei als Permanentmagnete ausgestaltet sein und, wie in der Offenlegungsschrift DE 10 2017 131 304 A1 beschrieben, angeordnet werden. Das erste Planarantriebsteilsystem 11 weist ferner eine erste Steuereinheit 21 auf, mit der die ersten Antriebselemente 15 angesteuert werden können. Insbesondere kann die erste Steuereinheit 21 eingerichtet sein, erste Stellgrößen für die ersten Antriebselemente 15 zu ermitteln und an die ersten Antriebselemente 15 auszugeben. Darüber hinaus ist die erste Steuereinheit 21 eingerichtet, erste Messwerte der ersten Positionsdetektoren 16 einzulesen. Ferner kann die erste Steuereinheit 21 dafür vorgesehen sein, die ersten Messwerte der ersten Positionsdetektoren 16 auszuwerten und dadurch Läuferpositionen, insbesondere eine Position des Läufers 100, zu bestimmen. Dies kann beispielsweise durch eine Auswertung eines Magnetfeldes der Läuferantriebselemente 101 erfolgen, insbesondere dann, wenn die Läuferantriebselemente 101 als Permanentmagnete ausgestaltet sind und die ersten Positionsdetektoren 16 Hall-Sensoren umfassen.

Die ersten Stellgrößen können dabei insbesondere Kräfte sein, die auf den Läufer 100 wirken sollen. Die ersten Antriebselemente 15 können dann so betrieben werden, dass die Kräfte der ersten Stellgrößen auf den Läufer 100 wirken. Alternativ können die ersten Stellgrößen auch direkt eine Betriebsinformation der ersten Antriebselemente 15 umfassen, beispielsweise einen Strom für ein als Antriebsspule ausgestaltetes erstes Antriebselement 15 oder eine Rotationsposition beziehungsweise Rotationsgeschwindigkeit für ein als beweglicher Magnet ausgestaltetes erstes Antriebselement 15.

Die erste Steuereinheit 21 ist mit einem der ersten Statormodule 12 verbunden, um eine Kommunikationsverbindung zwischen der ersten Steuereinheit 21 und dem betreffenden ersten Statormodul 12 bereitzustellen. Die ersten Statormodule 12 können ferner untereinander verbunden sein. Alternativ ist auch entgegen der Darstellung der Fig. 1 denkbar, dass die erste Steuereinheit 21 mit jedem der ersten Statormodule 12 verbunden ist.

Das zweite Planarantriebsteilsystem 31 weist zweite Statormodule 32 mit zweiten Statoreinheiten 33 auf, die eine zweite Statorfläche 34 bilden. Die zweiten Statormodule 33 weisen zweite Antriebselemente 35 und zweite Positionsdetektoren 36 auf. Die zweiten Antriebselemente 35 können analog zu den ersten Antriebselementen 15 ausgestaltet sein. Die zweiten Positionsdetektoren 36 können analog zu den ersten Positionsdetektoren 16 ausgestaltet sein. Der Läufer 100 ist mittels der zweiten Antriebselemente 35 grundsätzlich auch oberhalb der zweiten Statorfläche 34 in zumindest zwei Richtungen bewegbar, wenn der Läufer 100 oberhalb der zweiten Statorfläche 34 angeordnet ist.

Das zweite Planarantriebsteilsystem 31 weist ferner eine zweite Steuereinheit 41 auf, mit der die zweiten Antriebselemente 35 angesteuert werden können. Darüber hinaus ist die zweite Steuereinheit 41 eingerichtet, zweite Messwerte der zweiten Positionsdetektoren 16 einzulesen. Ferner kann die zweite Steuereinheit 41 dafür vorgesehen sein, die zweiten Messwerte der zweiten Positionsdetektoren 36 auszuwerten und dadurch Läuferpositionen zu bestimmen. Insbesondere kann dies analog zu den bereits für die erste Steuereinheit 21 beschriebenen Methoden erfolgen. Die Anordnung der zweiten Positionsdetektoren 36 in den zweiten Statormodulen 32 kann sich ebenfalls wie bereits für die ersten Statormodule 12 beschrieben an der Offenlegungsschrift DE 10 2017 131 320 A1 orientieren. Insbesondere kann vorgesehen sein, dass eine Vielzahl von zweiten Positionsdetektoren 36 innerhalb eines zweiten Statormoduls 32 vorgesehen ist, insbesondere mehr als zwanzig zweite Positionsdetektoren 36 und bevorzugt mehr als vierzig zweite Positionsdetektoren 36. Die zweiten Positionsdetektoren 36 können insbesondere als Magnetfeldsensoren ausgestaltet sein.

Die zweite Steuereinheit 41 ist mit einem der zweiten Statormodule 32 verbunden, um eine Kommunikationsverbindung zwischen der zweiten Steuereinheit 41 und dem betreffenden zweiten Statormodul 32 bereitzustellen. Die zweiten Statormodule 32 können ferner untereinander verbunden sein. Alternativ ist auch entgegen der Darstellung der Fig. 1 denkbar, dass die zweite Steuereinheit 41 mit jedem der zweiten Statormodule 32 verbunden ist. Die erste Steuereinheit 21 und die zweite Steuereinheit 41 sind mittels einer Kommunikationsverbindung verbunden und können Daten austauschen.

Die erste Statorfläche 14 grenzt an die zweite Statorfläche 34 an. In Fig. 1 ist dies derart ausgestaltet, dass sich die erste Statorfläche 14 und die zweite Statorfläche 34 berühren. Es kann aber auch ein Spalt zwischen der ersten Statorfläche 14 und der zweiten Statorfläche 34 vorgesehen sein (nicht in Fig. 1 gezeigt). Dadurch ist eine Grenze 4 zwischen der ersten Statorfläche 14 und der zweiten Statorfläche 34 gebildet.

Optional weist das Planarantriebssystem 1 ferner eine Zentralsteuereinheit 2 auf, die mit der ersten Steuereinheit 21 verbunden ist und mit der ersten Steuereinheit 21 Daten austauschen kann sowie mit der zweiten Steuereinheit 41 verbunden ist und mit der zweiten Steuereinheit 41 Daten austauschen kann. Ferner ist in Fig. 1 ein Übergangsbereich 3 gezeigt, der an einer Grenze 4 zwischen dem ersten Planarantriebsteilsystem 11 und dem zweiten Planarantriebsteilsystem 31 angeordnet ist, und jeweils diejenigen der ersten Statormodule 12 umfasst, die an das zweite Planarantriebsteilsystem 31 angrenzen beziehungsweise jeweils diejenigen der zweiten Statormodule 32 umfasst, die an das erste Planarantriebsteilsystem 11 angrenzen. Die Grenze 4 in Fig. 1 ist geradlinig gezeigt. Die Grenze 4 muss jedoch nicht geradlinig verlaufen, sondern kann einen beliebigen Verlauf aufweisen.

Es kann vorgesehen sein, dass der Läufer 100, wie in Fig. 1 gezeigt, oberhalb der ersten Statorfläche 14 beziehungsweise der zweiten Statorfläche 34 schwebt. Dies kann beispielsweise durch den Betrieb der ersten Antriebselemente 15 beziehungsweise der zweiten Antriebselemente 35, insbesondere durch mittels der von den ersten Antriebselementen 15 beziehungsweise den zweiten Antriebselementen 35 erzeugten Magnetfelder, erfolgen. Alternativ kann vorgesehen sein, dass die ersten Antriebselemente 15 beziehungsweise die zweiten Antriebselemente 35 nur eine Bewegung parallel zur ersten Statorfläche 14 beziehungsweise zur zweiten Statorfläche 34 verursachen und der Läufer 100 beispielsweise mittels eines Luftkissens oder mittels Bürsten oder Rollen oberhalb der ersten Statorfläche 14 beziehungsweise der zweiten Statorfläche 34 gehalten wird. Der Läufer 100 kann zumindest in zwei Richtungen parallel zur ersten Statorfläche 14 beziehungsweise zur zweiten Statorfläche 34 bewegt werden. Ferner kann optional eine Bewegung des Läufers 100 senkrecht zur ersten Statorfläche 14 beziehungsweise zur zweiten Statorfläche 34 erfolgen. Zusätzlich kann auch vorgesehen sein, dass der Läufer 100 Rotationsbewegungen und Kippbewegungen ausführt. Sind alle diese Bewegungsmöglichkeiten vorgesehen, kann der Läufer 100 in insgesamt sechs Dimensionen bewegt werden, beispielsweise durch Betrieb der ersten Antriebselemente 15 beziehungsweise der zweiten Antriebselemente 35.

Anstelle der Darstellung der Fig. 1 kann alternativ vorgesehen sein, dass das erste Planarantriebsteilsystem 11 und/oder das zweite Planarantriebsteilsystem 31 mehrere Teilanordnungen der jeweiligen Statormodule 12, 32 aufweisen, sodass die erste Statorfläche 14 mehrere Anordnungen der ersten Statormodule 12 und/oder die zweite Statorfläche 34 mehrere Anordnungen der zweiten Statormodule 32 aufweist. Auch in diesen Fällen kann das erfindungsgemäße Verfahren zum Einsatz kommen.

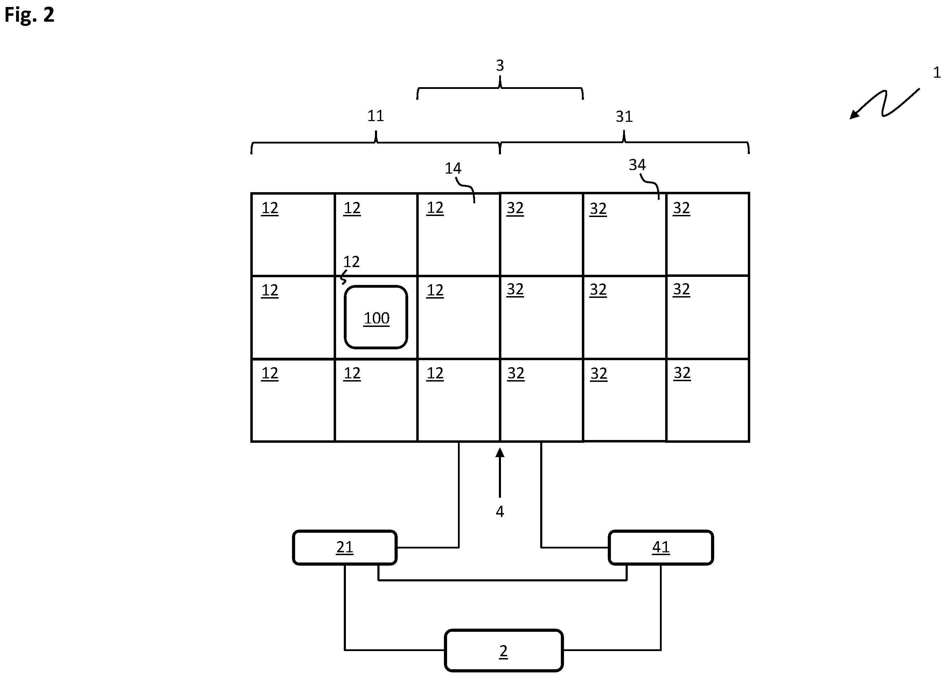

Fig. 2 zeigt eine Draufsicht auf das Planarantriebssystem 1 der Fig. 1. Das erste Planarantriebsteilsystem 11 umfasst neun erste Statormodule 12, die in einer 3x3-Anordnung angeordnet sind. Das zweite Planarantriebsteilsystem 31 umfasst neun zweite Statormodule 32, die in einer 3x3-Anordnung angeordnet sind. Es können auch andere Anordnungen gewählt werden. Außerdem kann auch die Anzahl der ersten Statormodule 12 beziehungsweise der zweiten Statormodule 32 anders sein. Ferner können die Anordnungen der ersten Statormodule 12 des ersten Planarantriebsteilsystems 11 unterschiedlich zu den Anordnungen der zweiten Statormodule 32 des zweiten Planarantriebsteilsystems 31 sein.

Solange der Läufer, wie in den Fig. 1 und 2 gezeigt, außerhalb des Übergangsbereichs 3 angeordnet ist, kann vorgesehen sein, dass ausschließlich die erste Steuereinheit 21 eine Kontrolle über den Läufer 100 ausübt. Eine Erfassung der Position des Läufers 100 (Läuferposition) kann dann ausschließlich mit den ersten Positionsdetektoren 16 in Verbindung mit der ersten Steuereinheit 21 erfolgen. Für den Antrieb des Läufers 100 sind die ersten Antriebselemente 15 ausreichend. Es wird also keine zweite Stellgröße für eines der zweiten Antriebselemente 35 berechnet, da dies für den Antrieb des Läufers 100 nicht erforderlich ist.

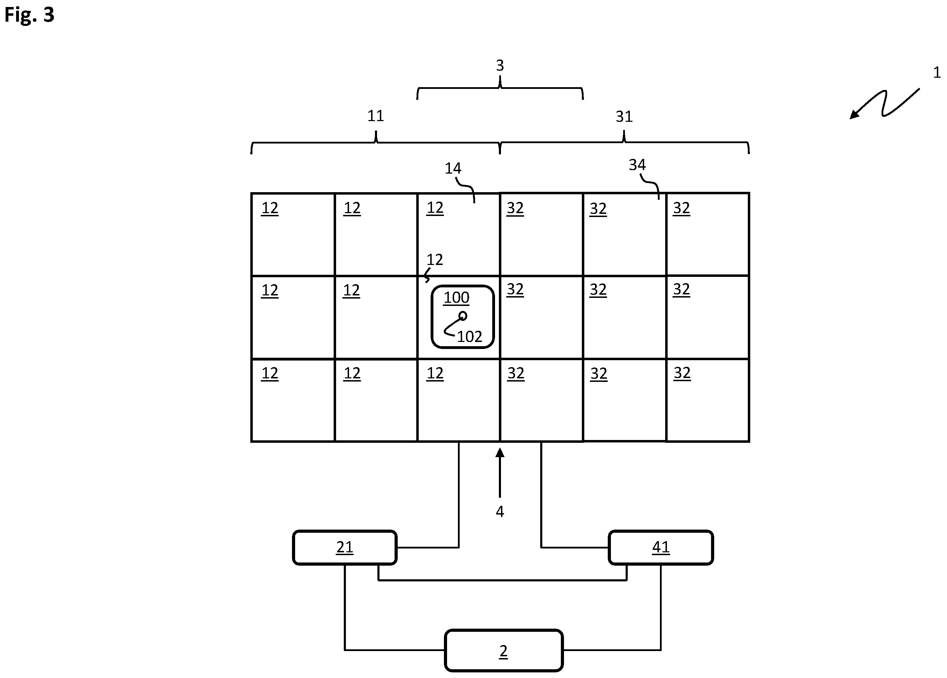

Fig. 3 zeigt eine weitere Draufsicht auf das Planarantriebssystem 1 der Fig. 1 und 2. Der Läufer 100 ist zwischenzeitlich bewegt worden und befindet sich im Übergangsbereich 3, jedoch immer noch oberhalb der ersten Statorfläche 14 des ersten Planarantriebsteilsystems 11. Abhängig von einer Randbedingung kann vorgesehen sein, dass der Läufer 100 nun mittels einer Kooperation des ersten Planarantriebsteilsystems 11 und des zweiten Planarantriebsteilsystems 31 angetrieben werden muss. Die Randbedingung kann beispielsweise sein, dass der Läufer 100 oberhalb derjenigen ersten Statormodule 12 angeordnet ist, die an das zweite Planarantriebsteilsystem 31 angrenzen. Eine alternative Randbedingung kann sein, dass sich der Läufer 100 im Übergangsbereich 3 befindet. Gegebenenfalls kann in diesem Fall der Übergangsbereich 3 auch größer oder kleiner sein und beispielsweise mehr als die in Fig. 3 gezeigten ersten Statormodule 12 beziehungsweise zweiten Statormodule 32 umfassen. Der Übergangsbereich 3 kann insbesondere so gewählt werden, dass jeweils eindeutig ist, zu welchen Übergangsbereichen 3 ein erstes Statormodul 12 beziehungsweise ein zweites Statormodul 32 gehört. Dies kann insbesondere dann gelten, wenn Abmessungen des Läufers 100 parallel zur ersten Statorfläche 14 größer sind als der durch ein erstes Statormodul 12 gebildete Teil der ersten Statorfläche 14. Eine alternative Randbedingung kann sein, dass ein Läufermittelpunkt 102 einen vorgegebenen Abstand zur Grenze 4 aufweist. Dies kann mit einem Verfahren zum Betreiben des Planarantriebssystems 1 geschehen, das im Folgenden erläutert wird. Eine weitere alternative Randbedingung kann sein, dass zum Antrieb des Läufers 100 zumindest ein zweites Antriebselement 35 oder zur Bestimmung der Läuferposition zumindest ein zweiter Positionsdetektor 36 benötigt wird.

Es kann vorgesehen sein, dass das erste Planarantriebsteilsystem 11 einen Normalbereich außerhalb des Übergangsbereichs 3 aufweist. Im Normalbereich übernimmt die erste Steuereinheit 21 die vollständige Kontrolle über den Läufer 100, ohne dass auf Messwerte von Positionsdetektoren oder auf Antriebselemente von weiteren Statormodulen zurückgegriffen werden muss, die außerhalb des Planarantriebsteilsystems 11 liegen. Im Übergangsbereich 3 hingegen wird auf Messwerte von Positionsdetektoren und/oder auf Antriebselemente von weiteren Statormodulen zurückgegriffen, die außerhalb des Planarantriebsteilsystems 11 liegen. Als Randbedingung kann dann beispielsweise angesehen werden, dass sich der Läufer 100 in den Übergangsbereich 3 bewegt und deshalb auf Messwerte von Positionsdetektoren und/oder auf Antriebselemente von den weiteren Statormodulen zurückgegriffen werden muss.

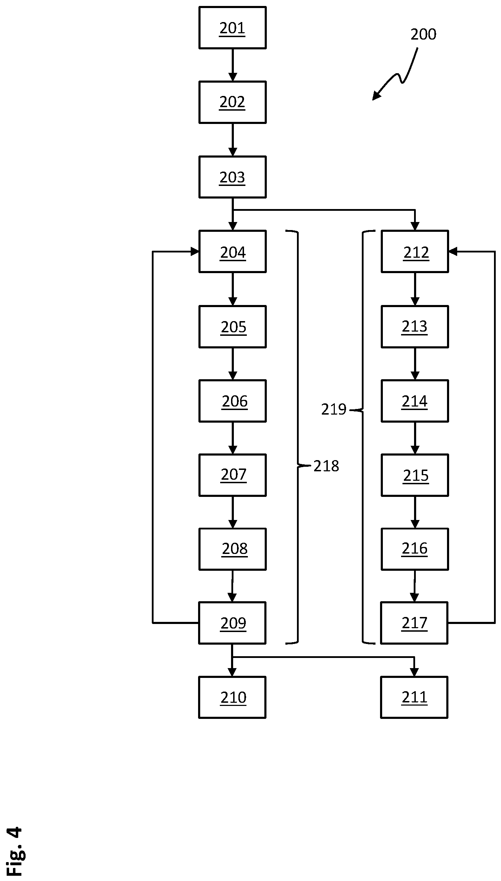

Fig. 4 zeigt ein Ablaufdiagramm 200 eines Verfahrens zum Betreiben des Planarantriebssystems 1. Das Planarantriebssystem 1 kann beispielsweise entsprechend der Fig. 1 bis 3 ausgebildet sein. In einem Antriebskooperationsschritt 201 wird eine Antriebskooperation anhand der Randbedingung durch die erste Steuereinheit 21 ausgelöst. In einem Kooperationssignalausgabeschritt 202 wird ein Kooperationssignal von der ersten Steuereinheit 21 an die zweite Steuereinheit 41 ausgegeben. Anschließend empfängt die zweite Steuereinheit 41 das Kooperationssignal in einem Kooperationssignalempfangsschritt 203. In einem ersten Messwertausgabeschritt 204 werden dann die zweiten Messwerten der zweiten Positionsdetektoren 36 an die erste Steuereinheit 21 durch die zweite Steuereinheit 41 ausgegeben. Die erste Steuereinheit 21 empfängt die zweiten Messwerte in einem ersten Messwertempfangsschritt 205. In einem ersten Ermittlungsschritt 206 werden erste Läuferpositionsdaten aus den ersten Messwerten der ersten Positionsdetektoren 16 und den zweiten Messwerten der zweiten Positionsdetektoren 36 durch die erste Steuereinheit 21 ermittelt. In einem ersten Vergleichs- und Berechnungsschritt 207 werden die ersten Läuferpositionsdaten mit ersten Läuferpositionssolldaten durch die erste Steuereinheit 21 verglichen und eine erste Stellgröße für eines der ersten Antriebselemente 15 und/oder eine zweite Stellgröße für eines der zweiten Antriebselemente 36 anhand des Vergleichs der ersten Läuferpositionsdaten mit den ersten Läuferpositionssolldaten durch die erste Steuereinheit 21 berechnet. Insbesondere können alle ersten Stellgrößen und zweiten Stellgrößen berechnet werden, die für einen Antrieb des Läufers 100 notwendig sind. Dies kann durch einen Vergleich der Läuferpositionsdaten mit den bekannten Positionen der ersten Antriebselemente 15 und der zweiten Antriebselemente 35 erfolgen. Beispielsweise können erste Stellgrößen für alle ersten Antriebselemente 15 und zweite Stellgrößen für alle zweiten Antriebselemente 35 berechnet werden, die vom Läufer 100 überdeckt werden. In einem ersten Stellgrößenausgabeschritt 208 wird die zweite Stellgröße von der ersten Steuereinheit 21 an die zweite Steuereinheit 41 ausgegeben, falls die zweite Stellgröße berechnet wurde und insbesondere zum Ansteuern des Läufers benötigt wird. Wenn die zweite Stellgröße nicht berechnet wurde, da sie zum Ansteuern des Läufers beispielsweise nicht benötigt wird, ist die zweite Stellgröße oder sind die zweiten Stellgrößen insbesondere hinsichtlich der aktuellen Läuferposition nicht relevant, beziehungsweise müssen nicht verwendet werden oder haben keinen Einfluss. Die zweite Steuereinheit 41 empfängt daraufhin gegebenenfalls die zweite Stellgröße in einem ersten Stellgrößenempfangsschritt 209. Sind mehrere zweite Stellgrößen berechnet worden, werden auch alle zweiten Stellgrößen von der ersten Steuereinheit 21 an die zweite Steuereinheit 41 übertragen. In einem ersten Betriebsschritt 210 wird dann das erste Antriebselement 15 mit der für das erste Antriebselement berechneten ersten Stellgröße durch die erste Steuereinheit 21 betrieben. In einem zweiten Betriebsschritt 211 wird das zweite Antriebselement 35 mit der für das zweite Antriebselement 35 berechneten zweiten Stellgröße durch die zweite Steuereinheit 41 betrieben. Sind mehr als eine erste Stellgröße beziehungsweise zweite Stellgröße berechnet worden, erfolgt der Betrieb im ersten Betriebsschritt 210 nach allen ersten Stellgrößen und im zweiten Betriebsschritt 211 nach allen zweiten Stellgrößen. Im Folgenden sind nicht immer an allen Stellen beide Varianten erwähnt, es kann jedoch immer davon ausgegangen werden, dass auf eine erste Stellgröße beziehungsweise zweite Stellgröße gerichtete Formulierung immer auch eine Mehrzahl von ersten Stellgrößen beziehungsweise zweiten Stellgrößen umfassen soll und umgekehrt.

Dem Verfahren zum Betreiben des Planarantriebssystems 1 liegt der Gedanke zugrunde, dass das erste Planarantriebsteilsystem 11 und das zweite Planarantriebsteilsystem 31 grundsätzlich Läufer 100 autark steuern können. Für bestimmte Betriebszustände, wenn beispielsweise ein Läufer 100 im Grenzbereich 3 zwischen dem ersten Planarantriebsteilsystem 11 und dem zweiten Planarantriebsteilsystem 31 bewegt werden soll, wird der Läufer 100 jedoch kooperierend angetrieben. Um dies zu ermöglichen, ist in diesem Verfahren die erste Steuereinheit 21 für die Steuerung des Läufers 100 zuständig. Die zweite Steuereinheit 41 stellt jedoch die zweiten Messwerte der zweiten Positionsdetektoren 36 zur Verfügung. Dies ermöglicht der ersten Steuereinheit 21, eine genaue Positionsbestimmung des Läufers 100 durchzuführen, auch wenn sich der Läufer 100 beispielsweise bereits zumindest teilweise oberhalb der zweiten 34 Statorfläche befindet. Durch die Ausgabe der zweiten Stellgröße an die zweite Steuereinheit 41 ist diese ferner in der Lage, das zweite Antriebselement 35 derart zu betreiben, dass der Läufer 100 auch vom zweiten Antriebselement 35 angetrieben werden kann. Die zweite Steuereinheit 41 führt also keine eigene Steuerung durch, sondern betreibt die zweiten Antriebselemente 35 ausschließlich nach der empfangenen zweiten Stellgröße beziehungsweise den empfangenen zweiten Stellgrößen. Falls die zweiten Stellgrößen zum Ansteuern des Läufers 100 nicht benötigt werden, beispielsweise wenn sich der Läufer 100 komplett oberhalb der ersten Statorfläche 14 befindet, kann vorgesehen sein, dass die zweite Stellgröße trotzdem von der ersten Steuereinheit 21 ausgegeben wird. Ferner kann vorgesehen sein, dass die erste Steuereinheit 21 in diesem Fall eine entsprechende Information ausgibt, anhand derer die zweite Steuereinheit 41 erkennt, dass die zweite Stellgröße zum Ansteuern des Läufers 100 nicht benötigt werden. Dadurch kann gegebenenfalls Übertragungskapazität eingespart werden.

Alternativ kann vorgesehen sein, dass die erste Steuereinheit 21 die erste Stellgröße beziehungsweise die ersten Stellgrößen berechnet und die zweite Steuereinheit 41 die zweite Stellgröße beziehungsweise die zweiten Stellgrößen berechnet. In diesem Fall kann dann die erste Steuereinheit 21 die ersten Antriebselemente 15 mittels der ersten Stellgrößen betreiben. Die zweite Steuereinheit 41 betreibt die zweiten Antriebselemente 35 mittels der zweiten Stellgrößen.

Die ersten Stellgrößen können dabei insbesondere Kräfte sein, die auf den Läufer 100 wirken sollen. Die ersten Antriebselemente 15 können dann so betrieben werden, dass die Kräfte der ersten Stellgrößen auf den Läufer 100 wirken. Alternativ können die ersten Stellgrößen auch direkt eine Betriebsinformation der ersten Antriebselemente 15 umfassen, beispielsweise einen Strom für ein als Antriebsspule ausgestaltetes erstes Antriebselement 15 oder eine Rotationsposition beziehungsweise Rotationsgeschwindigkeit für ein als beweglicher Magnet ausgestaltetes erstes Antriebselement 15. Die zweiten Stellgrößen können ebenfalls insbesondere Kräfte sein, die auf den Läufer 100 wirken sollen. Die zweiten Antriebselemente 35 können dann so betrieben werden, dass die Kräfte der zweiten Stellgrößen auf den Läufer 100 wirken. Alternativ können die zweiten Stellgrößen auch direkt eine Betriebsinformation der zweiten Antriebselemente 35 umfassen, beispielsweise einen Strom für ein als Antriebsspule ausgestaltetes zweites Antriebselement 35 oder eine Rotationsposition beziehungsweise Rotationsgeschwindigkeit für ein als beweglicher Magnet ausgestaltetes zweites Antriebselement 35.

Die erste Stellgröße beziehungsweise die ersten Stellgrößen und die zweite Stellgröße beziehungsweise die zweiten Stellgrößen können dabei mittels einer Regelung der ersten Steuereinheit 21 berechnet werden. Insbesondere kann dabei vorgesehen sein, dass aus einer Läuferposition (Läuferistposition) und einer Läufersollposition eine resultierende Kraft, zumindest zweidimensional, gegebenenfalls aber auch bis zu sechsdimensional, berechnet wird. Die Läuferistposition und die Läufersollposition können dabei ebenfalls sechsdimensional sein, also zwei Dimensionen parallel zur ersten Statorfläche 14 beziehungsweise zweiten Statorfläche 34, eine Dimension senkrecht zur ersten Statorfläche 14 beziehungsweise zweiten Statorfläche 34, eine Dimension als Rotation um eine Achse senkrecht zur ersten Statorfläche 14 beziehungsweise zweiten Statorfläche 34 und zwei Dimensionen als Verkippung um Achsen parallel zur ersten Statorfläche 14 beziehungsweise zweiten Statorfläche 34 beinhalten. Die ersten Antriebselemente 15 beziehungsweise zweiten Antriebselemente 35 werden dann derart betrieben, dass eine Kraft auf die Läuferantriebselemente 101 der resultierenden Kraft entspricht. Diese Regelung kann beispielsweise mittels eines Integralreglers erfolgen. Alternativ zur Regelung über die resultierende Kraft kann auch eine direkte Positionsregelung vorgesehen sein.

Ferner ist in Fig. 4 optional gezeigt, dass in einem Ausführungsbeispiel das Verfahren nach dem ersten Stellgrößenempfangsschritt 209 neben der Ausführung des ersten Betriebsschritts 210 und des zweiten Betriebsschritts 211 wieder in den ersten Messwertausgabeschritt 204 wechseln kann und dadurch der erste Messwertausgabeschritt 204, der erste Messwertempfangsschritt 205, der erste Ermittlungsschritt 206, der erste Vergleichs- und Berechnungsschritt 207, der erste Stellgrößenausgabeschritt 208 und der erste Stellgrößenempfangsschritt 209 zyklisch wiederholt werden. Nach jeder dieser Wiederholungen können der erste Betriebsschritt 210 und der zweite Betriebsschritt 211 ausgeführt werden. Dieses zyklische Wiederholen kann beispielsweise mit einer vorgegebenen Zykluszeit durchgeführt werden, wobei die vorgegebene Zykluszeit kleiner als eine Millisekunde, insbesondere kleiner als eine halbe Millisekunde, ist und beispielsweise 250 Mikrosekunden betragen kann. Mit einer Zykluszeit in diesem Bereich kann beispielsweise die erste Steuereinheit 21 des ersten Planarantriebsteilsystems 11 einhundert erste Statormodule 12 ansteuern und vierzig Läufer 100 oberhalb der ersten Statorfläche 14 kontrollieren. Die zweite Steuereinheit 41 des zweiten Planarantriebsteilsystems 31 kann einhundert zweite Statormodule 32 ansteuern und vierzig Läufer 100 oberhalb der zweiten Statorfläche 34 kontrollieren. Je nach technischer Ausstattung der ersten Steuereinheit 21 und/oder zweiten Steuereinheit 41, des verwendeten Datenübertragungsverfahrens beziehungsweise Datenübertragungssystems, der Ausgestaltung des Planarantriebssystems 1 und weiterer Randbedingungen können selbstverständlich auch mehr oder weniger Statormodule 12, 32 in einem Planarantriebsteilsystem 11, 31 angesteuert und mehr oder weniger Läufer 100 in einem Planarantriebsteilsystem 11, 31 kontrolliert werden.

Die Berechnung der ersten Stellgröße beziehungsweise der ersten Stellgrößen und der zweiten Stellgröße beziehungsweise der zweiten Stellgrößen durch die erste Steuereinheit 21 führt dazu, dass die erste Steuereinheit 21 eine Position des Läufers 100 kontrolliert. Die zweite Steuereinheit 41 arbeitet im Wesentlichen als Befehlsempfänger und betreibt die zweiten Antriebselemente 35 ausschließlich mit den von der ersten Steuereinheit 21 übermittelten zweiten Stellgrößen.

Ebenfalls optional in Fig. 4 gezeigt ist, dass in einem Ausführungsbeispiel des Verfahrens nach dem Kooperationssignalempfangsschritt 203 parallel ein zweiter Messwertausgabeschritt 212 ausgeführt werden kann, in dem eine Ausgabe der ersten Messwerte der ersten Positionsdetektoren 16 von der ersten Steuereinheit 21 an die zweite Steuereinheit 41 erfolgt. In einem zweiten Messwertempfangsschritt 213 empfängt die zweite Steuereinheit 41 die ersten Messwerte. Anschließend werden in einem zweiten Ermittlungsschritt 214 zweite Läuferpositionsdaten aus den zweiten Messwerten und den ersten Messwerten durch die zweite Steuereinheit 41 ermittelt. In einem zweiten Vergleichs- und Berechnungsschritt 215 erfolgt ein Vergleich der zweiten Läuferpositionsdaten mit zweiten Läuferpositionssolldaten durch die zweite Steuereinheit 41 und eine Berechnung von einer ersten redundanten Stellgröße für eines der ersten Antriebselemente 15 und/oder eine Berechnung von einer zweiten redundanten Stellgröße für eines der zweiten Antriebselemente 35 durch die zweite Steuereinheit 41. In einem zweiten Stellgrößenausgabeschritt 216 wird die erste redundante Stellgröße von der zweiten Steuereinheit 41 an die erste Steuereinheit 21 ausgegeben. In einem zweiten Stellgrößenempfangsschritt 217 wird die erste redundante Stellgröße durch die erste Steuereinheit 21 empfangen. Gegebenenfalls können auch hier der zweite Messwertausgabeschritt 212, der zweite Messwertempfangsschritt 213, der zweite Ermittlungsschritt 214, der zweite Vergleichs- und Berechnungsschritt 215, der zweite Stellgrößenausgabeschritt 216 und der zweite Stellgrößenempfangsschritt 217 zyklisch wiederholt werden.

Durch die zusätzliche Berechnung der ersten redundanten Stellgröße beziehungsweise der ersten redundanten Stellgrößen und der zweiten redundanten Stellgrößen beziehungsweise der zweiten redundanten Stellgrößen wird die zweite Steuereinheit 41 in die Lage versetzt, jederzeit die Kontrolle über den Läufer 100 zu übernehmen. Insbesondere kann dieses Verfahren zur Folge haben, dass ein Regler der zweiten Steuereinheit 41 bereits mit allen für die Regelung notwendigen aktuellen Zustandsgrößen der Regelung, insbesondere Regelparametern. ausgestattet ist, so dass ein Kontrollübergang zwischen der ersten Steuereinheit 21 und der zweiten Steuereinheit 41 nicht daran scheitert, dass der zweiten Steuereinheit 41 nicht alle Regelparameter zur Verfügung stehen. Dies ermöglicht einen sicheren Betrieb des Planarantriebssystems 1.

Insbesondere kann dabei vorgesehen sein, dass die Läuferpositionssolldaten von der Zentralsteuereinheit 2 an die erste Steuereinheit 21 beziehungsweise die zweite Steuereinheit 41 übertragen werden. Alternativ kann vorgesehen sein, dass die Läuferpositionssolldaten von der ersten Steuereinheit 21 an die zweite Steuereinheit 41 übertragen werden.

Gegebenenfalls kann der zweite Betriebsschritt 211 auch anhand der im zweiten Vergleichs- und Berechnungsschritt 215 bestimmten redundanten zweiten Stellgröße erfolgen.

Für die im Folgenden weiter beschriebenen Ausführungsbeispiele des Verfahrens zum Betreiben des Planarantriebssystems 1 können der erste Messwertausgabeschritt 204, der erste Messwertempfangsschritt 205, der erste Ermittlungsschritt 206, der erste Vergleichs- und Berechnungsschritt 207, der erste Stellgrößenausgabeschritt 208 und der erste Stellgrößenempfangsschritt 209 als erster Positionssteuerablauf 218 und der zweite Messwertausgabeschritt 212, der zweite Messwertempfangsschritt 213, der zweite Ermittlungsschritt 214, der zweite Vergleichs- und Berechnungsschritt 215, der zweite Stellgrößenausgabeschritt 216 und der zweite Stellgrößenempfangsschritt 217 als zweiter Positionssteuerablauf 219 bezeichnet und zusammengefasst werden.

Ein Verfahren zum Betreiben der ersten Steuereinheit 21 kann die folgenden Schritte umfassen:
- Auslösen einer Antriebskooperation anhand einer Randbedingung im Antriebskooperationsschritt 201;
- Ausgabe eines Kooperationssignals an eine zweite Steuereinheit im Kooperationssignalausgabeschritt 202;
- Empfang der zweiten Messwerte von der zweiten Steuereinheit im ersten Messwertempfangsschritt 205;
- Ermitteln von ersten Läuferpositionsdaten aus den ersten Messwerten der ersten Positionsdetektoren 16 und den zweiten Messwerten im ersten Ermittlungsschritt 206;
- Vergleich der ersten Läuferpositionsdaten mit ersten Läuferpositionssolldaten und Berechnung von einer ersten Stellgröße für eines der ersten Antriebselemente 15 und/oder Berechnung von einer zweiten Stellgröße für eines der zweiten Antriebselemente 35 anhand des Vergleichs der ersten Läuferpositionsdaten mit den ersten Läuferpositionssolldaten im ersten Vergleichs- und Berechnungsschritt 207;
- Ausgabe der zweiten Stellgröße an die zweite Steuereinheit 41, falls die zweite Stellgröße berechnet wurde im ersten Stellgrößenausgabeschritt 208;
- Betreiben des ersten Antriebselements 15 mit der für das erste Antriebselemet 15 berechneten ersten Stellgröße im ersten Betriebsschritt 210.

Auch hier kann vorgesehen sein, dass der erste Messwertempfangsschritt 205, der erste Ermittlungsschritt 206, der erste Vergleichs- und Berechnungsschritt 207 und der erste Stellgrößenausgabeschritt 208 zyklisch wiederholt werden. Ferner kann vorgesehen sein, dass der zweite Messwertausgabeschritt 212 und der zweiter Stellgrößenempfangsschritt 217 ebenfalls von der ersten Steuereinheit 21 ausgeführt werden. Nach jeder der zyklischen Wiederholungen erfolgt der erste Betriebsschritt 210.

Ein Verfahren zum Betreiben der zweiten Steuereinheit 41 umfasst die folgenden Schritte:
- Empfang eines Kooperationssignals im Kooperationssignalempfangsschritt 203;
- Ausgabe der zweiten Messwerte der zweiten Positionsdetektoren 36 an die erste Steuereinheit im ersten Messwertausgabeschritt 204;
- Empfang der zweiten Stellgröße im ersten Stellgrößenempfangsschritt 208;
- Betreiben des zweiten Antriebselements 35 mit der für das zweite Antriebselement 35 berechneten zweiten Stellgröße durch die zweite Steuereinheit 41 im zweiten Betriebsschritt 211.

Auch hier kann vorgesehen sein, dass der erste Messwertausgabeschritt 204 und der erste Stellgrößenempfangsschritt 208 zyklisch wiederholt werden. Ferner kann das Verfahren zusätzlich den zweiten Messwertempfangsschritt 213, den zweiten Ermittlungsschritt 214, den zweiten Vergleichs- und Berechnungsschritt 215 und den zweiten Stellgrößenausgabeschritt 216 umfassen. Nach jeder der zyklischen Wiederholungen erfolgt der zweite Betriebsschritt 211.

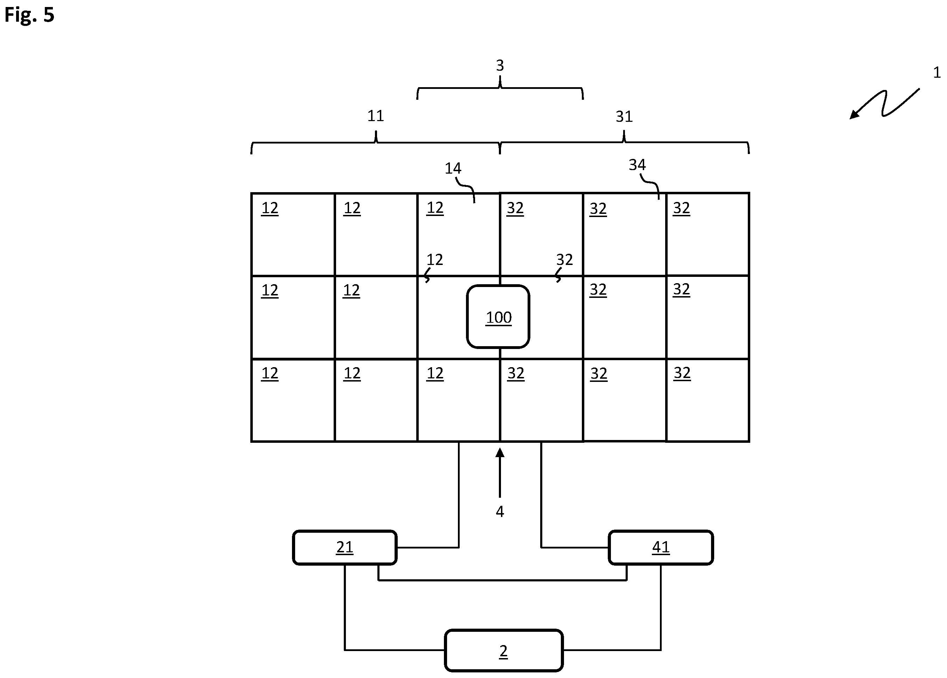

Fig. 5 zeigt eine weitere Draufsicht auf das Planarantriebssystem 1 der Fig. 1 bis 3. Der Läufer 100 ist teilweise über die Grenze 4 bewegt, so dass der Läufer 100 zumindest teilweise oberhalb der zweiten Statorfläche 34 angeordnet ist. In dieser Position kann weiter vorgesehen sein, dass eine Kontrolle über den Läufer 100 von der ersten Steuereinheit 21 ausgeübt wird. Die zweite Steuereinheit 41 stellt lediglich die zweiten Messwerte der zweiten Positionsdetektoren 36 zur Verfügung und betreibt die zweiten Antriebselemente 35 anhand der zweiten Stellgrößen.

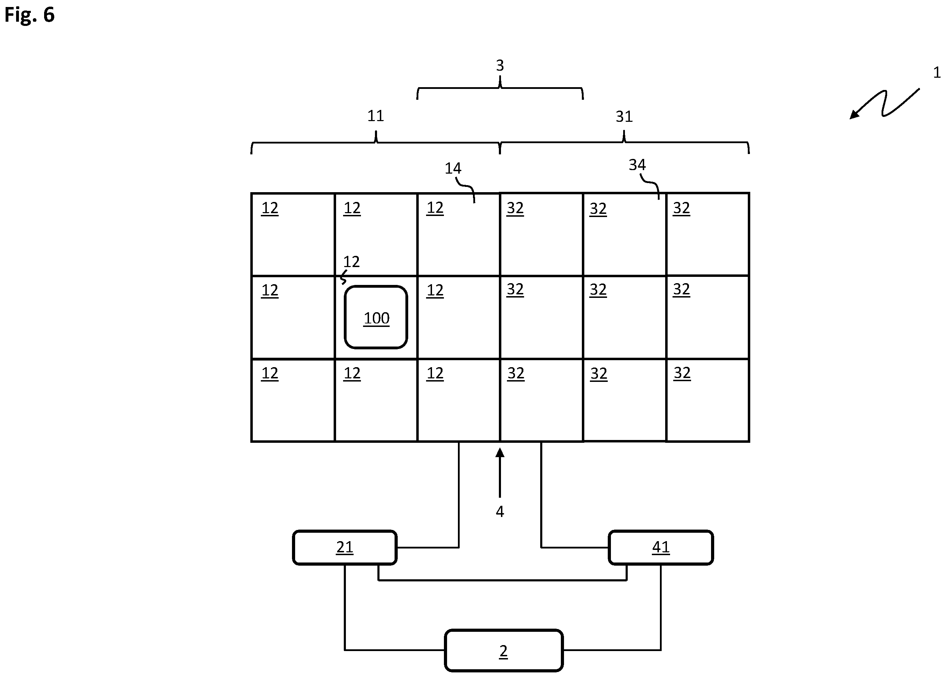

Fig. 6 zeigt eine weitere Draufsicht auf das Planarantriebssystem 1 der Fig. 1 bis 3 und 5. Der Läufer 100 ist zurück über die erste Statorfläche 14 bewegt und befindet sich nun wieder komplett oberhalb der ersten Statorfläche 14. In diesem Fall ist ein Übergang der Kontrolle des Läufers 100 von der ersten Steuereinheit 21 zur zweiten Steuereinheit 41 nicht erforderlich, da zu allen Zeiten eine Berechnung der ersten Stellgrößen und der zweiten Stellgrößen durch die erste Steuereinheit 21 erfolgen kann. Ist der Läufer 100 wieder außerhalb des Übergangsbereichs 3, kann ferner ein Terminierungssignal von der ersten Steuereinheit 21 an die zweite Steuereinheit 41 ausgegeben werden. Alternativ kann vorgesehen sein, dass das Terminierungssignal bereits ausgegeben wird, wenn sich der Läufer 100 noch im Übergangsbereich 3 befindet, es jedoch klar ist, dass der Läufer 100 nicht zurück Richtung des zweiten Planarantriebsteilsystems 31 bewegt werden soll. Nach Ausgabe des Terminierungssignals werden keine Messwerte der ersten Positionsdetektoren 16 beziehungsweise zweiten Positionsdetektoren 36 und keine ersten Stellgrößen für die ersten Antriebselemente 15 beziehungsweise zweiten Stellgrößen für die zweiten Antriebselemente 35 mehr zwischen der ersten Steuereinheit 21 und der zweiten Steuereinheit 41 ausgetauscht.

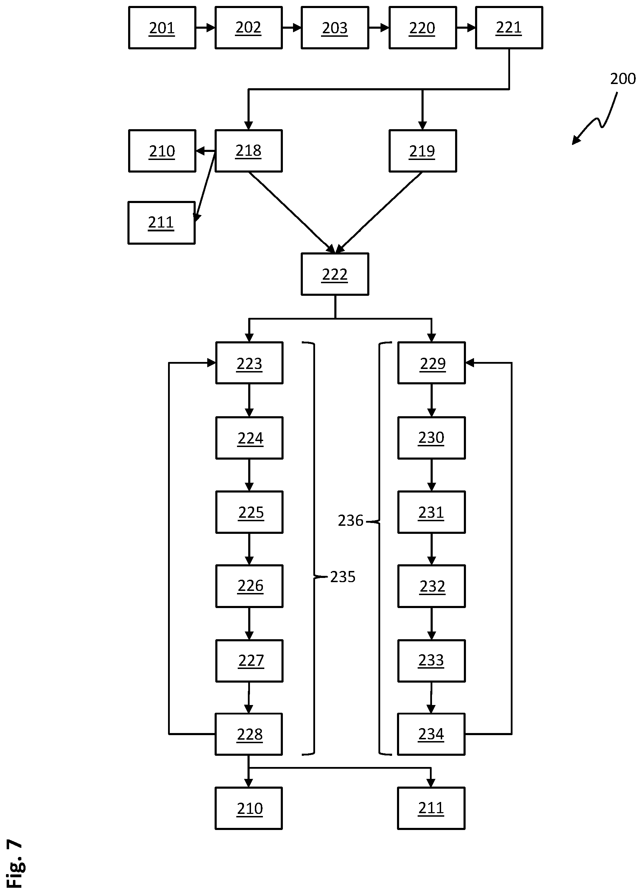

Fig. 7 zeigt ein weiteres Ablaufdiagramm 200 eines Verfahrens zum Betreiben des Planarantriebssystems 1, bei dem zum Verfahren der Fig. 4 identische Schritte mit identischen Bezugszeichen versehen sind und optionale Schritte im Folgenden erläutert werden.

In einem Ausführungsbeispiel ist das Kooperationssignal ein Transfersignal. Nach dem Empfang des Transfersignals durch die zweite Steuereinheit 41 im Kooperationssignalempfangsschritt 203 überprüft die zweite Steuereinheit 41 in einem Überprüfungsschritt 220, ob ein Läufertransfer möglich ist. Der Läufertransfer kann dabei einen Transfer des Läufers 100 vom ersten Planarantriebsteilsystem 11 auf das zweite Planarantriebsteilsystem 31 beinhalten. Für den Fall, dass ein Läufertransfer möglich ist, wird von der zweiten Steuereinheit 41 in einem Ausgabeschritt 221 eine Bestätigung an die erste Steuereinheit 21 ausgegeben. Für den Fall, dass kein Läufertransfer möglich ist, wird von der zweiten Steuereinheit 41 in einem Ausgabeschritt 221 eine Fehlermeldung an die erste Steuereinheit 21 ausgegeben. Im Falle der Fehlermeldung findet kein Läufertransfer statt. Ferner kann die Fehlermeldung zur Folge haben, dass der kooperierende Antrieb beendet wird, ansonsten kann vorgesehen sein, den ersten Positionssteuerablauf 218 und gegebenenfalls den zweiten Positionssteuerablauf 219 durchzuführen wie im Zusammenhang mit Fig. 4 beschrieben.

In einem Ausführungsbeispiel überprüft die zweite Steuereinheit 41 im Überprüfungsschritt 220, ob ein Läufertransfer möglich ist, indem eine freie Rechenkapazität der zweiten Steuereinheit 41 ausgewertet wird. Dies kann beispielsweise anhand einer aktuellen CPU-Auslastung und/oder Speicherauslastung der zweiten Steuereinheit 41 erfolgen. Ferner kann auch eine Anzahl an möglichen Läufern 100 vorgegeben sein, beispielsweise die weiter oben genannte Zahl von vierzig Läufern 100. Kann nach diesen Kriterien ein weiterer Läufer 100 kontrolliert werden, wird die Bestätigung ausgegeben, ansonsten die Fehlermeldung.

Nachdem der erste Positionssteuerablauf 218 und gegebenenfalls der zweite Positionssteuerablauf 219 durchlaufen wurden, beispielsweise auch mehrfach zyklisch wiederholt, findet ein Kontrollübergangsschritt 222 statt. Der erste Positionssteuerablauf 218 ermöglicht eine Steuerung des Läufers 100 vor dem Kontrollübergangsschritt 222. Der zweite Positionssteuerablauf 219 kann genutzt werden, um einen Regler der zweiten Steuereinheit 41 bereits mit allen für eine Kontrolle des Läufers 100 nötigen Werten zu versorgen. Im Kontrollübergangsschritt 222 kann ein Kontrollübergang von der ersten Steuereinheit 21 auf die zweite Steuereinheit 41 stattfinden. Ferner findet ein Läuferübergang vom ersten Planarantriebsteilsystem 11 auf das zweite Planarantriebsteilsystem 31 statt. Dabei ist es nicht zwingend erforderlich, dass der Läuferübergang und der Kontrollübergang gleichzeitig stattfinden. Gegebenenfalls kann der Kontrollübergang vor oder nach dem Läuferübergang stattfinden. Nach dem Kontrollübergang beziehungsweise dem Kontrollübergangsschritt 222 erhält die zweite Steuereinheit 41 die Kontrolle über den Läufer 100 und es werden die im Folgenden erläuterten Schritte durchgeführt. In einem weiteren ersten Messwertausgabeschritt 223 werden die ersten Messwerte der ersten Positionsdetektoren 16 von der ersten Steuereinheit 21 an die zweite Steuereinheit 41 ausgegeben. Die ersten Messwerte werden durch die zweite Steuereinheit 41 in einem weiteren ersten Messwertempfangsschritt 224 empfangen. Anschließend ermittelt die zweite Steuereinheit 41 weitere erste Läuferpositionsdaten aus den ersten Messwerten und den zweiten Messwerten in einem weiteren ersten Ermittlungsschritt 225. In einem weiteren ersten Vergleichs- und Berechnungsschritt 226 werden die weiteren ersten Läuferpositionsdaten mit weiteren ersten Läuferpositionssolldaten durch die zweite Steuereinheit 41 verglichen und eine erste Stellgröße für eines der ersten Antriebselemente 15 und/oder eine zweite Stellgröße für eines der zweiten Antriebselemente 35 durch die zweite Steuereinheit 41 berechnet. In einem weiteren ersten Stellgrößenausgabeschritt 227 wird dann die erste Stellgröße von der zweiten Steuereinheit 41 an die erste Steuereinheit 21 ausgegeben, falls die erste Stellgröße berechnet wurde. In einem weiteren ersten Stellgrößenempfangsschritt 228 wird die ersten Stellgröße durch die erste Steuereinheit 21 empfangen. Anschließend erfolgt der bereits beschriebene erste Betriebsschritt 210 und der bereits beschriebene zweite Betriebsschritt 211. Auch hier können gegebenenfalls mehrere erste Stellgrößen berechnet und ausgegeben werden und mehrere zweite Stellgrößen berechnet und verwendet werden.

Ferner ist in Fig. 7 optional gezeigt, dass in einem Ausführungsbeispiel des Verfahrens nach dem weiteren ersten Stellgrößenempfangsschritt 228 wieder in den weiteren ersten Messwertausgabeschritt 223 wechseln kann und dadurch der weitere erste Messwertausgabeschritt 223, der weitere erste Messwertempfangsschritt 224, der weitere erste Ermittlungsschritt 225, der weitere erste Vergleichs- und Berechnungsschritt 226, der weitere erste Stellgrößenausgabeschritt 227 und der weitere erste Stellgrößenempfangsschritt 228 zyklisch wiederholt werden. Nach jeder dieser Wiederholungen können der erste Betriebsschritt 210 und der zweite Betriebsschritt 211 ausgeführt werden. Dieses zyklische Wiederholen kann beispielsweise mit einer vorgegebenen Zykluszeit durchgeführt werden, wobei die vorgegebene Zykluszeit kleiner als eine Millisekunde, insbesondere kleiner als eine halbe Millisekunde, ist und beispielsweise 250 Mikrosekunden betragen kann.

Ebenfalls optional in Fig. 7 gezeigt ist, dass in einem Ausführungsbeispiel des Verfahrens nach dem Kontrollübergangsschritt 222 parallel ein weiterer zweiter Messwertausgabeschritt 229 ausgeführt werden kann, in dem eine Ausgabe der zweiten Messwerte der zweiten Positionsdetektoren 36 von der zweiten Steuereinheit 41 an die erste Steuereinheit 21 erfolgt. In einem weiteren zweiten Messwertempfangsschritt 230 empfängt die erste Steuereinheit 21 die zweiten Messwerte. Anschließend werden in einem weiteren zweiten Ermittlungsschritt 231 weitere zweite Läuferpositionsdaten aus den zweiten Messwerten und den ersten Messwerten durch die erste Steuereinheit 21 ermittelt. In einem weiteren zweiten Vergleichs- und Berechnungsschritt 232 erfolgt ein Vergleich der weiteren zweiten ermittelten Läuferpositionsdaten mit weiteren zweiten Läuferpositionssolldaten durch die erste Steuereinheit 21 und eine Berechnung von einer weiteren ersten redundanten Stellgröße für eines der ersten Antriebselemente 15 und/oder eine Berechnung von einer weiteren zweiten redundanten Stellgröße für eines der zweiten Antriebselemente 35 durch die erste Steuereinheit 21. In einem weiteren zweiten Stellgrößenausgabeschritt 233 wird die weitere zweite redundante Stellgröße von der ersten Steuereinheit 21 an die zweite Steuereinheit 41 ausgegeben. In einem weiteren zweiten Stellgrößenempfangsschritt 234 wird die weitere zweite redundante Stellgröße durch die zweite Steuereinheit 41 empfangen. Gegebenenfalls können auch hier der weitere zweite Messwertausgabeschritt 229, der weitere zweite Messwertempfangsschritt 230, der weitere zweite Ermittlungsschritt 231, der weitere zweite Vergleichs- und Berechnungsschritt 232, der weitere zweite Stellgrößenausgabeschritt 233 und der weitere zweite Stellgrößenempfangsschritt 234 zyklisch wiederholt werden. Gegebenenfalls kann der erste Betriebsschritt 210 auch anhand der im weiteren zweiten Vergleichs- und Berechnungsschritt 232 bestimmten redundante erste Stellgröße erfolgen. Auch hier können mehrere weitere erste redundante Stellgrößen sowie mehrere weitere zweite redundante Stellgrößen berechnet und verwendet werden.

Durch die zusätzliche Berechnung der weiteren ersten redundanten Stellgröße beziehungsweise der weiteren ersten redundanten Stellgrößen und der weiteren zweiten redundanten Stellgröße beziehungsweise der weiteren zweiten redundanten Stellgrößen wird die erste Steuereinheit 21 in die Lage versetzt, jederzeit die Kontrolle über den Läufer 100 zurück zu übernehmen.

Für die im Folgenden weiter beschriebenen Ausführungsbeispiele des Verfahrens zum Betreiben des Planarantriebssystems 1 können der weitere erste Messwertausgabeschritt 223, der weitere erste Messwertempfangsschritt 224, der weitere erste Ermittlungsschritt 225, der weitere erste Vergleichs- und Berechnungsschritt 226, der weitere erste Stellgrößenausgabeschritt 227 und der weitere erste Stellgrößenempfangsschritt 228 als weiterer erster Positionssteuerablauf 235 und der zweite Messwertausgabeschritt 229, der weitere zweite Messwertempfangsschritt 230, der weitere zweite Ermittlungsschritt 231, der weitere zweite Vergleichs- und Berechnungsschritt 232, der weitere zweite Stellgrößenausgabeschritt 233 und der weitere zweite Stellgrößenempfangsschritt 234 als weiterer zweiter Positionssteuerablauf 236 bezeichnet und zusammengefasst werden.

Auch im Verfahren der Fig. 7 kann eine Regelung wie im Zusammenhang mit Fig. 4 erläutert vorgesehen sein. Insbesondere dadurch, dass die zweite Steuereinheit 41 bereits vor dem Kontrollübergang die ersten redundanten Stellgrößen und die zweiten redundanten Stellgrößen berechnet, kann eine Regelung durch die zweite Steuereinheit 41 schnell übernommen werden, ohne dass Latenzen auftreten, in denen ein Regler der zweiten Steuereinheit 41 noch nicht bereit ist.

Der Kontrollübergang des Kontrollübergangsschritts 222 kann auch interpoliert über einige Zyklen erfolgen. In diesem Fall werden für eine bestimmte Zeit oder über eine bestimmte Positionsstrecke die Stellgrößen sowohl der ersten Steuereinheit 21 als auch der zweiten Steuereinheit 41 verwendet. Beispielsweise könnte linear interpoliert werden von einer Vollständigen Verwendung der Stellgrößen der ersten Steuereinheit 21 hin zu einer vollständigen Verwendung der Stellgrößen der zweiten Steuereinheit 41. Sowohl die erste Steuereinheit 21 als auch die zweite Steuereinheit 41 interpolieren jeweils die verwendeten Stellgrößen. Das kann idealerweise dazu führen, dass sich bestimmte Zustandsgrößen in der übernehmenden Regelung langsam einstellen, wozu nur eine parallele Berechnung vor dem Umschalten nicht ausreichen würde.

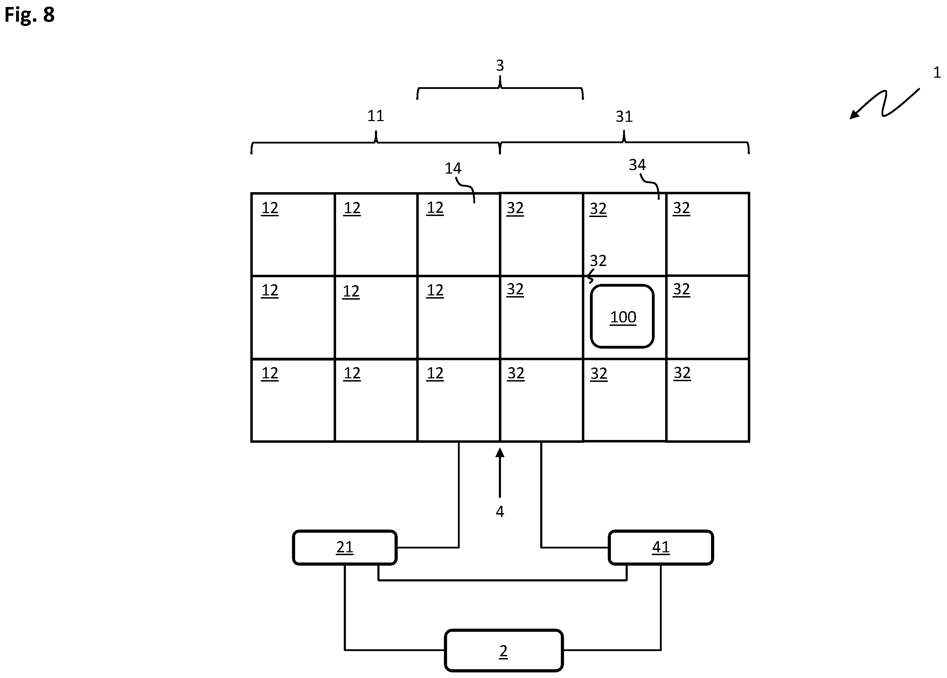

Fig. 8 zeigt eine weitere Draufsicht auf das Planarantriebssystem 1 der Fig. 1 bis 3, 5 und 6. Der Läufer 100 ist über das zweite Planarantriebsteilsystem 31 bewegt. Die zweite Steuereinheit 41 hat nach dem im Zusammenhang mit Fig. 7 erläuterten Kontrollübergangsschritt 222 die Kontrolle über den Läufer 100 übernommen und wird zur Berechnung der weiteren ersten Stellgrößen beziehungsweise weiteren zweiten Stellgrößen eingesetzt, während die erste Steuereinheit 21 gegebenenfalls weitere erste redundante Stellgrößen beziehungsweise weitere zweite redundante Stellgrößen berechnet. Ist der Läufer 100 wieder außerhalb des Übergangsbereichs 3 der zweiten Statorfläche 34, kann ferner ein Terminierungssignal von der zweiten Steuereinheit 41 an die erste Steuereinheit 21 ausgegeben werden. Nach Ausgabe des Terminierungssignals werden keine Messwerte der ersten Positionsdetektoren 16 beziehungsweise der zweiten Positionsdetektoren 36 und keine weiteren ersten Stellgrößen für die ersten Antriebselemente 15 beziehungsweise weiteren zweiten Stellgrößen für die zweiten Antriebselemente 35 mehr zwischen der ersten Steuereinheit 21 und der zweiten Steuereinheit 41 ausgetauscht. Alternativ kann vorgesehen sein, dass das Terminierungssignal von der zweiten Steuereinheit 41 beispielsweise bereits dann ausgegeben wird, wenn weder Messwerte der ersten Positionsdetektoren 16 noch ein Betrieb der ersten Antriebselemente 15 mehr für eine Steuerung des Läufers 100 benötigt werden.

In einem Ausführungsbeispiel des Verfahrens zum Betreiben des Planarantriebssystems 1 werden läuferspezifische Daten zwischen der ersten Steuereinheit 21 und der zweiten Steuereinheit 41 übertragen. Die läuferspezifischen Daten können dabei unter anderem beispielsweise eine Läuferidentifikationsnummer, eine Masse, eine Beladung und/oder eine Information über auf dem Läufer 100 angeordnete Objekte beinhalten. Die läuferspezifischen Daten können ferner eine Bezeichnung für den Läufer 100 und/oder spezifische, für den Läufer 100 zu verwendende Steuerungseinstellungen beinhalten. Insbesondere die Läuferidentifikationsnummer kann dazu dienen, einen Überblick über die einzelnen Läufer 100 zu behalten.

Es sind verschiedene Möglichkeiten denkbar, die dazu führen, dass die erste Steuereinheit 21 den Kooperationssignalausgabeschritt 202 ausführt. Beispielsweise kann der ersten Steuereinheit 21 bekannt sein, dass alle Läufer 100 oberhalb der ersten Statorfläche 14 beispielsweise nach einer Bearbeitung oberhalb der ersten Statorfläche 14 an das zweite Planarantriebsteilsystem 31 weitergegeben werden sollen. In diesem Fall kann jeweils ein Transfersignal ausgegeben werden. Die zweite Steuereinheit 41 prüft dann, ob ein Läufer 100 angenommen werden kann und der Läufertransfer wird durchgeführt.

Eine weitere Möglichkeit stellt die in den Fig. 1 bis 3, 5, 6 und 8 gezeigte Zentralsteuereinheit 2 dar. Die Zentralsteuereinheit 2 kann insbesondere die Läuferpositionen aller Läufer 100 des Planarantriebssystems 1 beobachten und ferner Sollpositionen für alle Läufer 100 vorgeben. Ferner kann vorgesehen sein, dass die Zentralsteuereinheit 2 vorgibt, wann die erste Steuereinheit 21 eine Antriebskooperation mit der zweiten Steuereinheit 41 auslösen soll. Die explizite Ansteuerung der ersten Antriebselemente 15 erfolgt dann durch die erste Steuereinheit 21, die der zweiten Antriebselemente 35 durch die zweite Steuereinheit 41.

In einem Ausführungsbeispiel empfängt die Zentralsteuereinheit 2 erste Läuferpositionsdaten von der ersten Steuereinheit 21 und zweite Läuferpositionsdaten von der zweiten Steuereinheit 41. Die Zentralsteuereinheit 2 gibt einen Kooperationsbefehl an die erste Steuereinheit 21 aus, wobei der Kooperationsbefehl eine Randbedingung darstellt. Anhand des Kooperationsbefehls führt die erste Steuereinheit 21 dann den Antriebskooperationsschritt 201 aus. Nachfolgend führen die erste Steuereinheit 21 und die zweite Steuereinheit 41 die im Zusammenhang mit Fig. 4 und 7 erläuterten weiteren Verfahrensschritte aus.

In einem Ausführungsbeispiel fragt die Zentralsteuereinheit 2 bei der zweiten Steuereinheit 41 ab, ob ein Läufertransfer möglich ist. Die zweite Steuereinheit 41 überprüft, ob ein Läufertransfer möglich ist, beispielsweise mittels der weiter oben bereits beschriebenen Methoden. Für den Fall, dass ein Läufertransfer möglich ist, wird eine Bestätigung an die Zentralsteuereinheit 2 ausgegeben. Für den Fall, dass kein Läufertransfer möglich ist, wird eine Fehlermeldung an die Zentralsteuereinheit 2 ausgegeben. Im Falle der Bestätigung kann dann die Zentralsteuereinheit 2 den Läufertransfer durch die Übermittlung eines entsprechenden Kooperationsbefehls an die erste Steuereinheit 21 auslösen. In diesem Fall kann vorgesehen sein, dass die erste Steuereinheit 21 insbesondere den Überprüfungsschritt 220 nicht durchführt. Alternativ kann der Zentralsteuereinheit 2 auch anhand der Läuferpositionen bekannt sein, ob für die zweite Steuereinheit 41 ein Läufertransfer möglich ist.

In einem Ausführungsbeispiel erkennt die Zentralsteuereinheit 2 anhand der ersten Läuferpositionsdaten und der zweiten Läuferpositionsdaten, dass der Läufertransfer abgeschlossen ist und gibt ein Terminierungssignal an die erste Steuereinheit 21 und/oder die zweite Steuereinheit 41 aus. Dadurch kann die Zentralsteuereinheit 2 die Antriebskooperation beenden.

In einem Ausführungsbeispiel gibt die Zentralsteuereinheit 2 einen Kontrollübergabebefehl an die erste Steuereinheit 21 und/oder die zweite Steuereinheit 41 aus. Ein Kontrollübergang wird anhand des Kontrollübergabebefehls durchgeführt. So kann die Zentralsteuereinheit 2 den Zeitpunkt des Kontrollübergangs steuern.

In einem Ausführungsbeispiel gibt die Zentralsteuereinheit 2 erste Läuferpositionssolldaten an die erste Steuereinheit 21 und/oder zweite Läuferpositionssolldaten an die zweite Steuereinheit 41 aus. Dies kann beispielsweise dann genutzt werden, wenn die Zentralsteuereinheit 2 die Positionen der Läufer 100 vorgeben soll, die tatsächliche Ansteuerung der ersten Antriebselemente 15 durch die erste Steuereinheit 21 beziehungsweise der zweiten Antriebselemente 35 durch die zweite Steuereinheit 41 geschehen soll. Ferner kann mit dem im Zusammenhang mit den Fig. 4 und 7 erläuterten Verfahren ein Kontrollübergang eines Läufers 100 zwischen der ersten Steuereinheit 21 und der zweiten Steuereinheit 41 erfolgen, wenn dies durch die ersten Läuferpositionssolldaten beziehungsweise zweiten Läuferpositionssolldaten erforderlich ist.

Ist die Zentralsteuereinheit 2 vorhanden, kann insbesondere vorgesehen sein, dass die Zentralsteuereinheit 2 Sollwerte für die Läuferpositionen an die erste Steuereinheit 21 beziehungsweise die zweite Steuereinheit 41 ausgibt. Diese Ausgabe kann zyklisch sein, eine Zyklusdauer kann aber größer sein als die für den ersten erster Positionssteuerablauf 218 beziehungsweise zweiten Positionssteuerablauf 219 beziehungsweise weiteren ersten Positionssteuerablauf 235 beziehungsweise weiteren zweiten Positionssteuerablauf 236 beschriebene Zykluszeit und im Bereich einiger Millisekunden bis zu zwanzig Millisekunden, beispielsweise bei zwei bis vier Millisekunden liegen. Die Zentralsteuereinheit 2 kann Sollwerte für Läuferpositionen von mehr Läufern 100 vorgeben als die erste Steuereinheit 21 und die zweite Steuereinheit 41 jeweils kontrollieren, da die Läufersollpositionen deutlich weniger Speicherkapazität benötigen als die für die explizite Steuerung notwendigen Daten hinsichtlich der Messwerte der ersten Positionsdetektoren 16 beziehungsweise der zweiten Positionsdetektoren 36 oder hinsichtlich der ersten Stellgrößen beziehungsweise der zweiten Stellgrößen. Alternativ kann vorgesehen sein, dass die Zentralsteuereinheit 2 mit einer zu den Steuereinheiten 21, 41 identischen Zykluszeit arbeiten. In diesem Fall kann jeweils eine exaktere Vorgabe von Läufersollpositionen erfolgen, die von den Steuereinheiten 21, 41 nicht interpoliert werden müssen.

Darüber hinaus gibt die Zentralsteuerung 2 unabhängig von diesem Zyklus gegebenenfalls Parameter oder läuferspezifische Informationen oder systemspezifische Informationen und/oder den Kooperationsbefehl und/oder den Kontrollübergabebefehl und/oder den Terminierungsbefehl aus. Die erste Steuereinheit 21 beziehungsweise die zweite Steuereinheit 41 geben zyklisch die ersten Läuferpositionen beziehungsweise die zweiten Läuferpositionen an die Zentralsteuerung 2 aus und empfangen außerhalb des Zyklus gegebenenfalls Parameter oder läuferspezifische Informationen oder systemspezifische Informationen oder den Kooperationsbefehl oder den Kontrollübergabebefehl. Darüber hinaus führt die erste Steuereinheit 21 gegebenenfalls zyklisch den ersten Positionssteuerablauf 218 beziehungsweise den weiteren zweiten Positionssteuerablauf 236 aus und die zweite Steuereinheit 41 gegebenenfalls zyklisch den zweiten Positionssteuerablauf 219 beziehungsweise den weiteren ersten Positionssteuerablauf 235.

Die Zentralsteuereinheit 2 kann insbesondere Kenntnis über alle Positionen aller Läufer 100 und gegebenenfalls auf den Läufern 100 angeordneter Objekte haben. Ferner kann die Zentralsteuereinheit 2 Läufersollpositionen vorgeben.

In einem Ausführungsbeispiel wird die Antriebskooperation gestartet, wenn sich ein Läufer 100 innerhalb eines vorgegebenen Abstandes zu einem Randbereich des ersten Planarantriebsteilsystems 11 befindet. Dies kann beispielsweise den Abstand zur Grenze 4 beinhalten. Es kann insbesondere vorgesehen sein, dass der Abstand einer Abmessung des Läufers 100 beziehungsweise eines ersten Statormoduls 12 entspricht.

Die erste Steuereinheit 21, die zweite Steuereinheit 41 und die Zentralsteuereinheit 2 können jeweils eine speicherprogrammierbare Steuerung (SPS) aufweisen, mit der die Verfahren jeweils durchgeführt werden können. Auf einer SPS der Zentralsteuereinheit 2 kann ferner ein Anwenderprogramm zur Festlegung der Läufersollpositionen oder von Läuferbewegungen ausgeführt werden. Ferner können die erste Steuereinheit 21, die zweite Steuereinheit 41 und die Zentralsteuereinheit 2 einen Rechner aufweisen, mit dem die Verfahren jeweils durchgeführt werden können. Ferner kann vorgesehen sein, dass die erste Steuereinheit 21 in die Zentralsteuereinheit 2 integriert ist oder die zweite Steuereinheit 41 in die Zentralsteuereinheit 2 integriert ist. Alternativ kann die Zentralsteuereinheit 2 in die erste Steuereinheit 21 oder die zweite Steuereinheit 41 integriert sein, also insbesondere im selben Gehäuse angeordnet sein.

Soll der Läufer 100 nun wieder vom zweiten Planarantriebsteilsystem 31 an das erste Planarantriebsteilsystem 11 übergeben werden, kann das in Fig. 7 gezeigte Verfahren wiederholt werden, wobei nun das zweite Planarantriebsteilsystem 31 mit der zweiten Steuereinheit 41 die Aufgaben des ersten Planarantriebsteilsystems 11 und der ersten Steuereinheit 11 wie im Zusammenhang mit Fig. 7 erläutert übernimmt und umgekehrt.

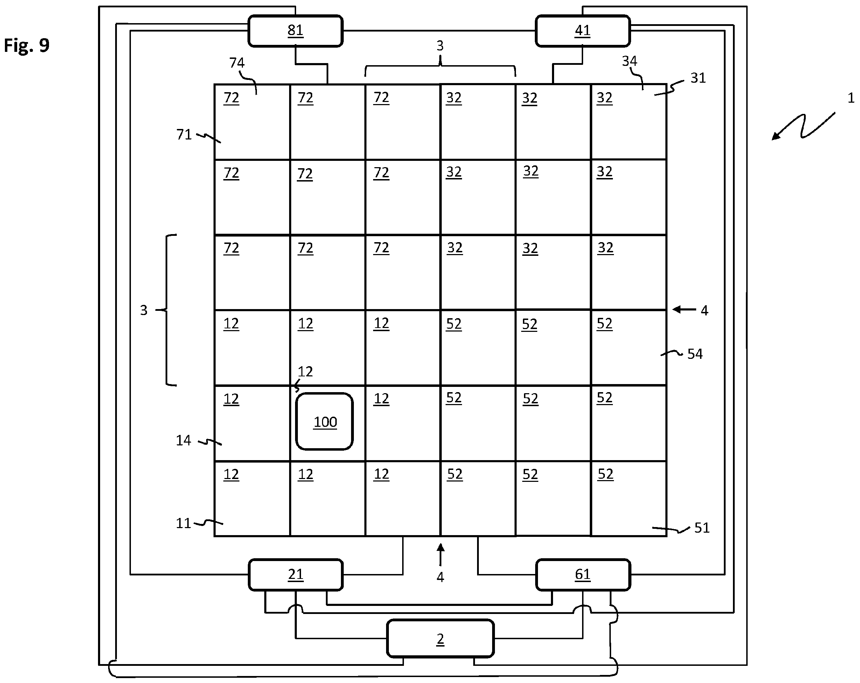

Fig. 9 zeigt ein weiteres Planarantriebssystem 1, das dem Planarantriebssystem 1 der Fig. 1, 2, 3, 5, 6 und 8 entspricht, sofern im Folgenden keine Unterschiede beschrieben sind. Neben dem ersten Planarantriebsteilsystem 11 und dem zweiten Planarantriebsteilsystem 31 weist das Planarantriebssystem 1 ein drittes Planarantriebsteilsystem 51 und ein viertes Planarantriebsteilsystem 71 auf. Das dritte Planarantriebsteilsystem 51 weist eine dritte Steuereinheit 61 sowie eine 3x3-Anordnung von dritten Statormodulen 52 auf, die eine dritte Statorfläche 54 bilden. Die dritte Steuereinheit 61 kann dazu dienen (in Fig. 9 nicht gezeigte) dritte Antriebselemente der dritten Statormodule 52 zu betreiben und (in Fig. 9 nicht gezeigte) dritte Positionsdetektoren der dritten Statormodule 52 auszulesen.

Das vierte Planarantriebsteilsystem 71 weist eine vierte Steuereinheit 81 sowie eine 3x3-Anordnung von vierten Statormodulen 72 auf, die eine vierte Statorfläche 74 bilden. Die vierte Steuereinheit 81 kann dazu dienen (in Fig. 9 nicht gezeigte) vierte Antriebselemente der vierten Statormodule 72 zu betreiben und (in Fig. 9 nicht gezeigte) vierte Positionsdetektoren der vierten Statormodule 72 auszulesen. Die dritten Antriebselemente und die vierten Antriebselemente können dabei wie die bereits beschriebenen ersten Antriebselemente 15 beziehungsweise zweiten Antriebselemente 35 aufgebaut sein. Die dritten Positionsdetektoren und die vierten Positionsdetektoren können dabei wie die bereits beschriebenen ersten Positionsdetektoren 16 beziehungsweise zweiten Positionsdetektoren 36 aufgebaut sein. Das erste Planarantriebsteilsystem 11, das zweite Planarantriebsteilsystem 31, das dritte Planarantriebsteilsystem 51 und das vierte Planarantriebsteilsystem 71 grenzen aneinander an. Dabei liegen sich das erste Planarantriebsteilsystem 11 und das zweite Planarantriebsteilsystem 31 diagonal gegenüber. Das dritte Planarantriebsteilsystem 51 und das vierte Planarantriebsteilsystem 71 liegen sich ebenfalls diagonal gegenüber. Ein Übergangsbereich 3 ist aus jeweils drei ersten Statormodulen 12, drei zweiten Statormodulen 32, drei dritten Statormodulen 52 und drei vierten Statormodulen 72 gebildet. Insbesondere besteht der Übergangsbereich 3 aus allen an die Grenzen 4 angrenzenden Statormodulen. Die erste Steuereinheit 21 ist mit der zweiten Steuereinheit 41, der dritten Steuereinheit 61 und der vierten Steuereinheit 81 direkt verbunden. Dadurch ist eine Kommunikation zwischen allen Steuereinheiten 21, 41, 61, 81 möglich. Alternativ kann es vorgesehen sein, dass die erste Steuereinheit 21, die zweite Steuereinheit 41, die dritte Steuereinheit 61 und die vierte Steuereinheit 81 jeweils nur eine Verbindung zu zwei benachbarten Steuereinheiten aufweisen und somit eine ringförmige Verbindung bilden. Dabei kann vorgesehen sein, dass eine Kommunikation zwischen allen in dieser ringförmigen Verbindung angeordneten Steuereinheiten 21, 41, 61, 81 möglich ist. Ferner ist die dritte Steuereinheit 61 mit der Zentralsteuereinheit 2 verbunden und die vierte Steuereinheit 81 ebenfalls mit der Zentralsteuereinheit 2 verbunden.

Mit dem im Zusammenhang mit den Fig. 1 bis 8 erläuterten Verfahren kann der Läufer 100 vom ersten Planarantriebsteilsystem 11 an das zweite Planarantriebsteilsystem 31 transferiert werden. Um vom ersten Planarantriebsteilsystem 11 zum zweiten Planarantriebsteilsystem 31 zu gelangen, kann dabei ferner vorgesehen sein, dass Teile des dritten Planarantriebsteilsystems 51 und/oder Teile des vierten Planarantriebsteilsystems 71 überfahren werden müssen. Dabei kann es vorgesehen sein, dass im Übergangsbereich 3 zunächst die erste Steuereinheit 21 Messwerte der zweiten Positionsdetektoren 36 von der zweiten Steuereinheit 41, Messwerte der dritten Positionsdetektoren von der dritten Steuereinheit 61 und Messwerte der vierten Positionsdetektoren von der vierten Steuereinheit 81 empfängt, daraus erste Stellgrößen, zweite Stellgrößen wie bereits beschrieben und dritte Stellgrößen für die dritten Antriebselemente sowie vierte Stellgrößen für die vierten Antriebselemente berechnet und die zweiten Stellgrößen an die zweite Steuereinheit 41, die dritten Stellgrößen an die dritte Steuereinheit 61 und die vierten Stellgrößen an die vierte Steuereinheit 81 ausgibt. Nachdem der Kontrollübergang stattgefunden hat, kann nun die zweite Steuereinheit 41 Messwerte der ersten Positionsdetektoren 16 von der ersten Steuereinheit 21, Messwerte der dritten Positionsdetektoren von der dritten Steuereinheit 61 und Messwerte der vierten Positionsdetektoren von der vierten Steuereinheit 81 empfangen, daraus weitere erste Stellgrößen, weitere zweite Stellgrößen wie bereits beschrieben und weitere dritte Stellgrößen für die dritten Antriebselemente sowie weitere vierte Stellgrößen für die vierten Antriebselemente berechnen und die weiteren ersten Stellgrößen an die erste Steuereinheit 21, die weiteren dritten Stellgrößen an die dritte Steuereinheit 61 und die weiteren vierten Stellgrößen an die vierte Steuereinheit 81 ausgeben. Bei dem Läuferübergang werden also alle Planarantriebsteilsysteme 11, 31, 51, 71 kooperierend betrieben, eine Kontrolle über den Läufer 100 übt aber zunächst nur die erste Steuereinheit 21 und dann die zweite Steuereinheit 41 aus. Insbesondere kann vorgesehen sein, dass die dritte Steuereinheit 61 zwar dritte Messwerte bereitstellt und gegebenenfalls dritte Antriebselemente anhand der dritten Stellgrößen betreibt und die vierte Steuereinheit 81 zwar vierte Messwerte bereitstellt und gegebenenfalls vierte Antriebselemente anhand der vierten Stellgrößen betreibt, weder die dritte Steuereinheit 61 noch die vierte Steuereinheit 81 jedoch eine Kontrolle über den Läufer 100 übernehmen.

Die gezeigten Ausführungsbeispiele der Planarantriebssysteme 1 sind immer mit nur einem Läufer 100 dargestellt und kooperierendes Antreiben beziehungsweise ein Transfer des Läufers 100 von einem der Planarantriebsteilsysteme 11, 31, 51, 71 auf ein anderes der Planarantriebsteilsysteme 11, 31, 51, 71 kann mit den beschriebenen Methoden erfolgen. Selbstverständlich kann jedes der Planarantriebsteilsysteme 11, 31, 51, 71 mehrere Läufer 100 kontrollieren. Gegebenenfalls können auch mehr als ein kooperierendes Antreiben beziehungsweise mehrere Läufertransfers gleichzeitig stattfinden, wobei für jeden betreffenden Läufer 100 die beschriebenen Methoden angewendet werden.

Die Planarantriebsteilsysteme 11, 31, 51, 71 können je nach Bedarf angeordnet sein, der sich aus der Anwendung des Planarantriebssystems 1 in der Automatisierungstechnik, insbesondere der Fertigungstechnik, der Handhabungstechnik, der Verfahrenstechnik, der Verpackungstechnik und der Drucktechnik, ergibt. Die Randbedingung für die Antriebskooperation kann sich daraus ergeben, dass eine der Steuereinheiten 21, 41, 61, 81 erkennt, dass sich ein Läufer auf ein anderes der Planarantriebsteilsysteme 11, 31, 51, 71 zubewegt und Positionsdetektoren beziehungsweise Antriebselemente des jeweiligen Planarantriebsteilsystems 11, 31, 51, 71 benötigt werden. In diesem Fall kann vorgesehen sein, dass die Steuereinheiten 21, 41, 61, 81 die Läufer 100 autark steuern und keine Zentralsteuereinheit 2 vorgesehen ist. In diesem Fall kann außerdem vorgesehen sein, dass eine Ermittlung der Läufersollposition durch eine der Steuereinheiten 21, 41, 61, 81 erfolgt. Alternativ kann die Zentralsteuereinheit 2 die Läuferpositionen vorgeben, wobei sich daraus gegebenenfalls ein Bedarf für kooperierendes Antreiben beziehungsweise einen Läufertransfer ergibt und in diesem Fall entweder die Zentralsteuereinheit 2 oder die Steuereinheiten 21, 41, 61, 81 das kooperierende Antreiben beziehungsweise den Läufertransfer auslösen.

Ferner kann vorgesehen sein, dass die Zentralsteuereinheit 2 und/oder die Steuereinheiten 21, 41, 61, 81 mit der Zentralsteuereinheit 2 und/oder die Steuereinheiten 21, 41, 61, 81 untereinander zeitsynchronisiert sind, beispielsweise mit verteilten Uhren. Zur Kommunikation der Steuereinheiten 21, 41, 61, 81 mit der Zentralsteuereinheit 2 und/oder die Steuereinheiten 21, 41, 61, 81 untereinander kann ein Feldbus verwendet werden, beispielsweise basierend auf Ethernet Technologie, gegebenenfalls EtherCAT. Zwischen den Steuereinheiten 21, 41, 61, 81 und gegebenenfalls der Zentralsteuereinheit 2 können auch weitere Netzwerkelemente wie beispielsweise Switche, Hubs und/oder Port Multiplier angeordnet sein.

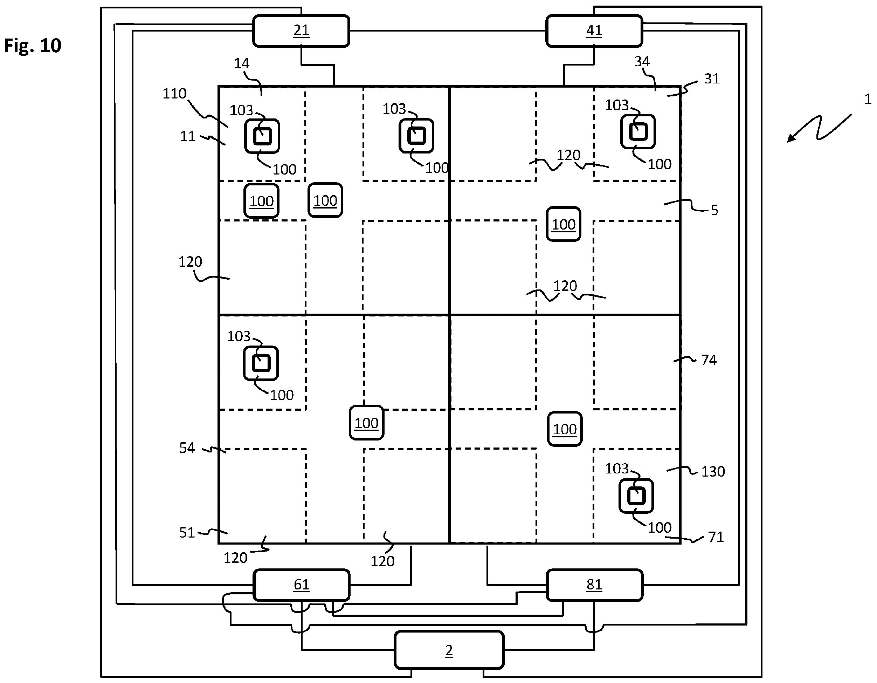

Fig. 10 zeigt eine Draufsicht auf ein weiteres Planarantriebssystem 1, das ein erstes Planarantriebsteilsystem 11, ein zweites Planarantriebsteilsystem 31, ein drittes Planarantriebsteilsystem 51 und ein viertes Planarantriebsteilsystem 71 aufweist. Die Planarantriebsteilsysteme 11, 31, 51, 71 können dabei die bereits beschriebenen Merkmale aufweisen und sind in einer 2x2-Anordnung angeordnet. In Fig. 10 sind der Übersichtlichkeit halber jedoch nur die erste Statorfläche 14 des ersten Planarantriebsteilsystems 11, die zweite Statorfläche 34 des zweiten Planarantriebsteilsystems 31, die dritte Statorfläche 54 des dritten Planarantriebsteilsystems 51 und die vierte Statorfläche 74 des vierten Planarantriebsteilsystems 71 sowie die erste Steuereinheit 21, die zweite Steuereinheit 41, die dritte Steuereinheit 61 und die vierte Steuereinheit 81 sowie die Zentralsteuereinheit 2 gezeigt. Die Antriebselemente und Positionsdetektoren können wir bereits beschrieben ausgestaltet sein. Jedes der Planarantriebsteilsysteme 11, 31, 51, 71 kann eine Vielzahl entsprechender Statormodule aufweisen. Auf einer gemeinsamen Statorfläche 5 des Planarantriebssystems 1, die durch die erste Statorfläche 14, die zweite Statorfläche 34, die dritte Statorfläche 54 und die vierte Statorfläche 74 gebildet ist, ist eine Objektübernahmestation 110 gezeigt, bei der ein Läufer 100 ein Objekt 103 von einem anderen Teil eines Automatisierungssystems übernehmen kann. Mehrere Objektbearbeitungsstationen 120 dienen einer Bearbeitung der Objekte 103. Eine Objektübergabestation 130 kann dazu genutzt werden, die Objekte wieder vom Läufer 100 an einen anderen Teil des Automatisierungssystems zu übergeben. Die Objektübernahmestation 110 und die Objektübergabestation 130 sind diagonal gegenüber auf der gemeinsamen Statorfläche 5 angeordnet. Die Objektbearbeitungsstationen 120 sind dabei auf der gemeinsamen Statorfläche 5 verteilt, mehrere Objektbearbeitungsstationen 120 sind sogar Teil mehrerer der Planarantriebsteilsysteme 11, 31, 51, 71. Bei der in Fig. 10 gezeigten Ausgestaltung ist es vorteilhaft, wenn die Zentralsteuereinheit 2 die Positionen der Läufer 100 vorgibt, die exakte Steuerung der Antriebselemente der Planarantriebsteilsysteme 11, 31, 51, 71 jedoch durch die jeweiligen Steuereinheiten 21, 41, 61, 81 erfolgt. Insbesondere kann vorgesehen sein, dass die Zentralsteuereinheit 2 hier einen Überblick über alle Läuferpositionen und Läufersollpositionen behält und diese an die entsprechenden Steuereinheiten 21, 41, 61, 81 weitergibt. Dies kann insbesondere dann vorteilhaft sein, wenn die Planarantriebsteilsysteme 11, 31, 51, 71 wie in Fig. 10 gezeigt in einer 2x2-Anordnung angeordnet sind. Ferner ermöglicht diese Ausgestaltung auch, dass gegebenenfalls unterschiedliche Bearbeitungen an den unterschiedlichen Objektbearbeitungsstationen 120 erfolgen können und so ein flexibles Automatisierungssystem erreicht werden kann.

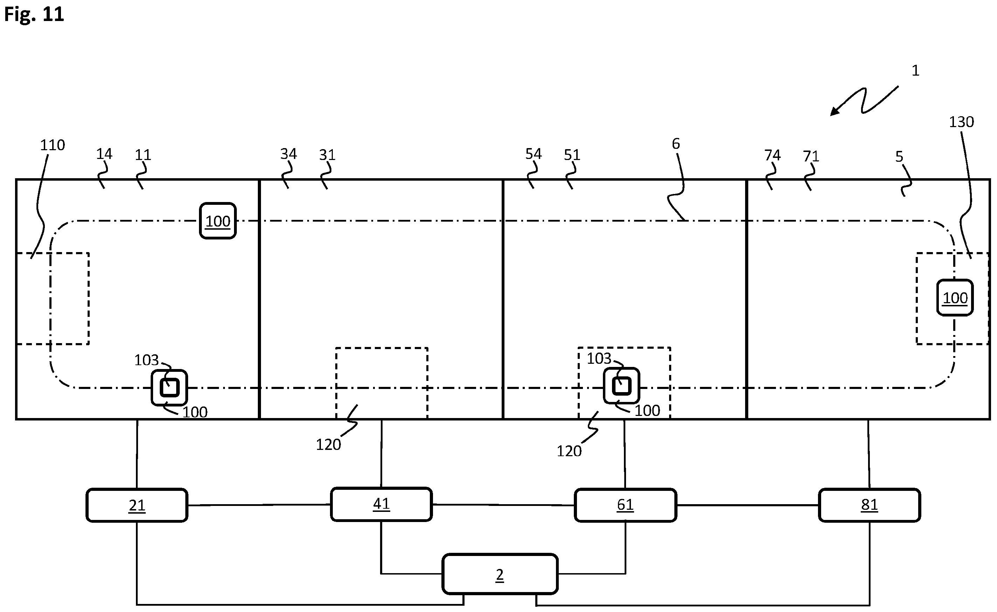

Fig. 11 zeigt eine Draufsicht auf ein weiteres Planarantriebssystem 1, das ein erstes Planarantriebsteilsystem 11, ein zweites Planarantriebsteilsystem 31, ein drittes Planarantriebsteilsystem 51 und ein viertes Planarantriebsteilsystem 71 aufweist. Die Planarantriebsteilsysteme 11, 31, 51, 71 können dabei die bereits beschriebenen Merkmale aufweisen und sind linear hintereinander angeordnet. Insbesondere grenzt das erste Planarantriebsteilsystem 11 an das zweite Planarantriebsteilsystem 31 an. Das zweite Planarantriebsteilsystem 31 grenzt an das erste Planarantriebsteilsystem 11 und das dritte Planarantriebsteilsystem 51 an. Das dritte Planarantriebsteilsystem 51 grenzt an das zweiten Planarantriebsteilsystem 31 und das vierte Planarantriebsteilsystem 71 an. Das vierte Planarantriebsteilsystem 71 grenzt an das dritte Planarantriebsteilsystem 51 an. In Fig. 11 sind der Übersichtlichkeit halber jedoch nur die erste Statorfläche 14 des ersten Planarantriebsteilsystems 11, die zweite Statorfläche 34 des zweiten Planarantriebsteilsystems 31, die dritte Statorfläche 54 des dritten Planarantriebsteilsystems 51 und die vierte Statorfläche 74 des vierten Planarantriebsteilsystems 71 sowie die erste Steuereinheit 21, die zweite Steuereinheit 41, die dritte Steuereinheit 61 und die vierte Steuereinheit 81 sowie die Zentralsteuereinheit 2 gezeigt. Die Antriebselemente und Positionsdetektoren können wir bereits beschrieben ausgestaltet sein, jedes der Planarantriebsteilsysteme 11, 31, 51, 71 kann eine Vielzahl entsprechender Statormodule aufweisen. Auf einer gemeinsamen Statorfläche 5 des Planarantriebssystems 1, die durch die erste Statorfläche 14, die zweite Statorfläche 34, die dritte Statorfläche 54 und die vierte Statorfläche 74 gebildet ist, ist eine Objektübernahmestation 110 gezeigt, bei der ein Läufer 100 ein Objekt 103 von einem anderen Teil eines Automatisierungssystems übernehmen kann. Die Objektübernahmestation 110 ist oberhalb der ersten Statorfläche 14 angeordnet. Mehrere Objektbearbeitungsstationen 120 dienen einer Bearbeitung der Objekte 103. Eine der Objektbearbeitungsstationen 120 ist oberhalb der zweiten Statorfläche 34 angeordnet. Eine der Objektbearbeitungsstationen 120 ist oberhalb der dritten Statorfläche 54 angeordnet. Eine Objektübergabestation 130 kann dazu genutzt werden, die Objekte wieder vom Läufer 100 an einen anderen Teil des Automatisierungssystems zu übergeben. Die Objektübergabestation 130 ist oberhalb der vierten Statorfläche 74 angeordnet. Eine vorgegebene Läuferbewegungsbahn 6 ist mit einer strichgepunkteten Linie auf der gemeinsamen Statorfläche 5 dargestellt. Die Läufer 100 folgen der vorgegebenen Läuferbewegungsbahn 6, die von der Objektübernahmestation 110 über die Objektbearbeitungsstationen 120 zur Objektübergabestation 130 und von dort zurück zur Objektübernahmestation 110 führt. Bei der in Fig. 11 gezeigten Ausgestaltung kann die Zentralsteuereinheit 2 die Positionen der Läufer 100 vorgeben, wobei dann die exakte Steuerung der Antriebselemente der Planarantriebsteilsysteme 11, 31, 51, 71 durch die jeweiligen Steuereinheiten 21, 41, 61, 81 erfolgt. Insbesondere kann vorgesehen sein, dass die Zentralsteuereinheit 2 hier einen Überblick über alle Läuferpositionen und Läufersollpositionen behält und diese an die entsprechenden Steuereinheiten 21, 41, 61, 81 weitergibt. Alternativ ist hier die Zentralsteuereinheit 2 jedoch nicht zwingend erforderlich. Da durch die vorgegebene Läuferbewegungsbahn 6 vorgegeben ist, welche Läufer 100 von welchem der Planarantriebsteilsysteme 11, 31, 51, 71 auf welches der Planarantriebsteilsysteme 11, 31, 51, 71 übergeben werden sollen, können die Steuereinheiten 21, 41, 61, 81 entsprechende Läufertransfers auch autark koordinieren und mit dem beschriebenen Verfahren durchführen. Dies kann eine Komplexität des Planarantriebssystems 1 verringern.

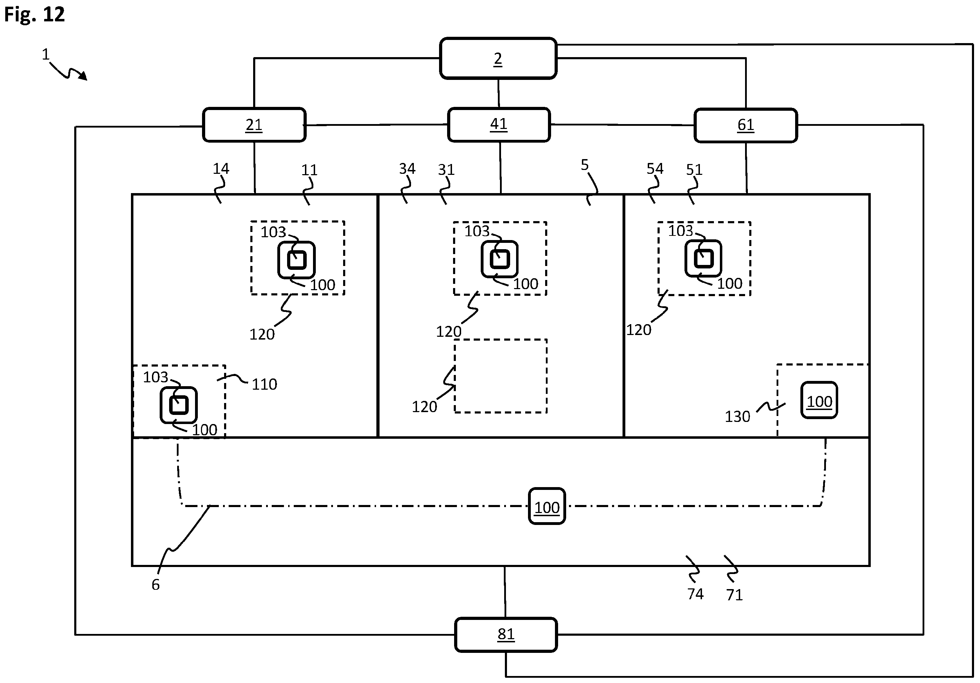

Fig. 12 zeigt eine Draufsicht auf ein weiteres Planarantriebssystem 1, das ein erstes Planarantriebsteilsystem 11, ein zweites Planarantriebsteilsystem 31, ein drittes Planarantriebsteilsystem 51 und ein viertes Planarantriebsteilsystem 71 aufweist. Die Planarantriebsteilsysteme 11, 31, 51, 71 können dabei die bereits beschriebenen Merkmale aufweisen. Das erste Planarantriebsteilsystem 11, das zweiten Planarantriebsteilsystem 31 und das dritte Planarantriebsteilsystem 51 sind linear hintereinander angeordnet. Über das vierte Planarantriebsteilsystem 71 ist das dritte Planarantriebsteilsystem 51 mit dem ersten Planarantriebsteilsystem 11 verbunden. In Fig. 12 sind der Übersichtlichkeit halber nur die erste Statorfläche 14 des ersten Planarantriebsteilsystems 11, die zweite Statorfläche 34 des zweiten Planarantriebsteilsystems 31, die dritte Statorfläche 54 des dritten Planarantriebsteilsystems 51 und die vierte Statorfläche 74 des vierten Planarantriebsteilsystems 71 sowie die erste Steuereinheit 21, die zweite Steuereinheit 41, die dritte Steuereinheit 61 und die vierte Steuereinheit 81 sowie die Zentralsteuereinheit 2 gezeigt. Die Antriebselemente und Positionsdetektoren können wie bereits beschrieben ausgestaltet sein, jedes der Planarantriebsteilsysteme 11, 31, 51, 71 kann eine Vielzahl entsprechender Statormodule aufweisen. Auf einer gemeinsamen Statorfläche 5 des Planarantriebssystems 1, die durch die erste Statorfläche 14, die zweite Statorfläche 34, die dritte Statorfläche 54 und die vierte Statorfläche 74 gebildet ist, ist eine Objektübernahmestation 110 gezeigt, bei der ein Läufer 100 ein Objekt 103 von einem anderen Teil eines Automatisierungssystems übernehmen kann. Die Objektübernahmestation 110 ist oberhalb der ersten Statorfläche 14 angeordnet. Mehrere Objektbearbeitungsstationen 120 dienen einer Bearbeitung der Objekte 103. Eine der Objektbearbeitungsstationen 120 ist oberhalb der ersten Statorfläche 14 angeordnet. Zwei Objektbearbeitungsstationen 120 sind oberhalb der zweiten Statorfläche 34 angeordnet Eine der Objektbearbeitungsstationen 120 ist oberhalb der dritten Statorfläche 54 angeordnet. Eine Objektübergabestation 130 kann dazu genutzt werden, die Objekte wieder vom Läufer 100 an einen anderen Teil des Automatisierungssystems zu übergeben. Die Objektübergabestation 130 ist oberhalb der dritten Statorfläche 54 angeordnet. Optional und nicht in Fig. 11 gezeigt kann eine Objektbearbeitungsstation 120, die Objektübernahmestation 110 und/oder die Objektübergabestation 130 auch oberhalb von mehreren Statorflächen 14, 34, 54, 74 angeordnet sein analog zu Fig. 10. Eine vorgegebene Läuferbewegungsbahn 6 ist mit einer strichgepunkteten Linie auf der vierten Statorfläche 74 dargestellt und verbindet die Objektübergabestation 130 mit der Objektübernahmestation 110. Die Läufer 100 folgen der vorgegebenen Läuferbewegungsbahn 6 also von der Objektübergabestation 130 zur Objektübernahmestation 110. Dieses Ausführungsbeispiel des Planarantriebssystems 1 kann beinalten, dass nicht jeder Läufer 100 jede der Objektbearbeitungsstationen 120 anfährt. Insbesondere kann beispielsweise vorgesehen sein, die Objektbearbeitungsstationen 120 auf der ersten Statorfläche 14 und/oder der dritten Statorfläche 54 auszulassen und/oder gegebenenfalls eine oder mehrere der Objektbearbeitungsstationen 120 auf der zweiten Statorfläche 34 auszulassen. Trotzdem werden Läufer 100 immer vom ersten Planarantriebsteilsystem 11 an das zweite Planarantriebsteilsystem 31, vom zweiten Planarantriebsteilsystem 31 an das dritte Planarantriebsteilsystem 51, vom dritten Planarantriebsteilsystem 51 an das vierte Planarantriebsteilsystem 71 und vom vierten Planarantriebsteilsystem 71 wieder an das erste Planarantriebsteilsystem 11 übergeben. Bei der in Fig. 12 gezeigten Ausgestaltung kann die Zentralsteuereinheit 2 die Positionen der Läufer 100 vorgeben, wobei dann die exakte Steuerung der Antriebselemente der Planarantriebsteilsysteme 11, 31, 51, 71 durch die jeweiligen Steuereinheiten 21, 41, 61, 81 erfolgt. Insbesondere kann vorgesehen sein, dass die Zentralsteuereinheit 2 hier einen Überblick über alle Läuferpositionen und Läufersollpositionen behält und diese an die entsprechenden Steuereinheiten 21, 41, 61, 81 weitergibt. Alternativ ist hier die Zentralsteuereinheit 2 jedoch ebenfalls nicht zwingend erforderlich. Da die an Läufertransfers jeweils beteiligten Planarantriebsteilsysteme 11, 31, 51, 71 vorgegeben sind, also welche Läufer 100 von welchem der Planarantriebsteilsysteme 11, 31, 51, 71 auf welches der Planarantriebsteilsysteme 11, 31, 51, 71 übergeben werden sollen, können die Steuereinheiten 21, 41, 61, 81 entsprechende Läufertransfers auch autark koordinieren und mit dem beschriebenen Verfahren durchführen. Dies kann eine Komplexität des Planarantriebssystems 1 verringern.

Neben den im Zusammenhang mit den Fig. 10 bis 12 erläuterten Ausgestaltungen des Planarantriebssystems 1 sind weitere Möglichkeiten denkbar, die die im erfindungsgemäßen Verfahren beschriebenen Methoden zur Antriebskoordinierung oder zum Läufertransfer nutzen. Insgesamt wird so eine flexible Ausgestaltung eines Automatisierungssystems möglich, welches ein Planarantriebssystem 1 als Transportmittel verwendet. Gegebenenfalls können auch Teile der Antriebskooperationen von der Zentralsteuereinheit 2 und andere Teile der Antriebskooperationen von den Steuereinheiten 21, 41, 61, 81 ausgelöst werden.

Die in der gesamten Beschreibung verwendeten Formulierungen hinsichtlich einer Einzahl oder einer Mehrzahl von Stellgrößen sind austauschbar. Ist von einer Stellgröße die Rede, können auch immer entsprechend mehrere Stellgrößen vorgesehen sein. Ist von mehreren Stellgrößen die Rede, kann auch immer nur eine der entsprechenden Stellgrößen vorgesehen sein.

### Bezugszeichenliste

- 1: Planarantriebssystem
- 2: Zentralsteuereinheit
- 3: Übergangsbereich
- 4: Grenze
- 5: gemeinsame Statorfläche
- 6: vorgegebene Läuferbewegungsbahn
- 11: erstes Planarantriebsteilsystem
- 12: erstes Statormodul
- 13: erste Statoreinheit
- 14: erste Statorfläche
- 15: erstes Antriebselement
- 16: erster Positionsdetektor
- 21: erste Steuereinheit
- 31: zweites Planarantriebsteilsystem
- 32: zweites Statormodul
- 33: zweite Statoreinheit
- 34: zweite Statorfläche
- 35: zweites Antriebselement
- 36: zweiter Positionsdetektor
- 41: zweite Steuereinheit
- 51: drittes Planarantriebsteilsystem
- 52: drittes Statormodul
- 54: dritte Statorfläche
- 61: dritte Steuereinheit
- 71: viertes Planarantriebsteilsystem
- 72: viertes Statormodul
- 74: vierte Statorfläche
- 81: vierte Steuereinheit
- 100: Läufer
- 101: Läuferantriebselement
- 102: Läufermittelpunkt
- 103: Objekt
- 110: Objektübernahmestation
- 120: Objektbearbeitungsstation
- 130: Objektübergabestation
- 200: Ablaufdiagramm
- 201: Antriebskooperationsschritt
- 202: Kooperationssignalausgabeschritt
- 203: Kooperationssignalempfangsschritt
- 204: erster Messwertausgabeschritt
- 205: erster Messwertempfangsschritt
- 206: erster Ermittlungsschritt
- 207: erster Vergleichs- und Berechnungsschritt
- 208: erster Stellgrößenausgabeschritt
- 209: erster Stellgrößenempfangsschritt
- 210: erster Betriebsschritt
- 211: zweiter Betriebsschritt
- 212: zweiter Messwertausgabeschritt
- 213: zweiter Messwertempfangsschritt
- 214: zweiter Ermittlungsschritt
- 215: zweiter Vergleichs- und Berechnungsschritt
- 216: zweiter Stellgrößenausgabeschritt
- 217: zweiter Stellgrößenempfangsschritt
- 218: erster Positionssteuerablauf
- 219: zweiter Positionssteuerablauf
- 220: Überprüfungsschritt
- 221: Ausgabeschritt
- 222: Kontrollübergangsschritt
- 223: weiterer erster Messwertausgabeschritt
- 224: weiterer erster Messwertempfangsschritt
- 225: weiterer erster Ermittlungsschritt
- 226: weiterer erster Vergleichs- und Berechnungsschritt
- 227: weiterer erster Stellgrößenausgabeschritt
- 228: weiterer erster Stellgrößenempfangsschritt
- 229: weiterer zweiter Messwertausgabeschritt
- 230: weiterer zweiter Messwertempfangsschritt
- 231: weiterer zweiter Ermittlungsschritt
- 232: weiterer zweiter Vergleichs- und Berechnungsschritt
- 233: weiterer zweiter Stellgrößenausgabeschritt
- 234: weiterer zweiter Stellgrößenempfangsschritt
- 235: weiterer erster Positionssteuerablauf
- 236: weiterer zweiter Positionssteuerablauf

## Patentansprüche

1. Verfahren zum Betreiben eines Planarantriebssystems (1), wobei das Planarantriebssystem (1) ein erstes Planarantriebsteilsystem (11) und ein zweites Planarantriebsteilsystem (31) aufweist, wobei das erste Planarantriebsteilsystem (11) erste Statormodule (12) aufweist, die eine erste Statorfläche (14) bilden, wobei die ersten Statormodule (12) erste Antriebselemente (15) und erste Positionsdetektoren (16) aufweisen, wobei das erste Planarantriebsteilsystem (11) ferner eine erste Steuereinheit (21) aufweist, mit der die ersten Antriebselemente (15) angesteuert werden können, wobei die erste Steuereinheit (21) ferner eingerichtet ist, erste Messwerte der ersten Positionsdetektoren (16) einzulesen, wobei das zweite Planarantriebsteilsystem (31) zweite Statormodule (32) aufweist, die eine zweite Statorfläche (34) bilden, wobei die zweiten Statormodule (32) zweite Antriebselemente (35) und zweite Positionsdetektoren (36) aufweisen, wobei das zweite Planarantriebsteilsystem (31) ferner eine zweite Steuereinheit (41) aufweist, mit der die zweiten Antriebselemente (35) angesteuert werden können, wobei die zweite Steuereinheit (41) ferner eingerichtet ist, zweite Messwerte der zweiten Positionsdetektoren (36) einzulesen, wobei die erste Statorfläche (14) an die zweite Statorfläche (34) angrenzt, wobei das Planarantriebssystem (1) ferner zumindest einen Läufer (100) aufweist, der mittels der ersten Antriebselemente (15) und der zweiten Antriebselemente (35) oberhalb der ersten Statorfläche (14) und/ oder der zweiten Statorfläche (35) in zumindest zwei Richtungen bewegbar ist, wobei das Verfahren zum Betreiben des Planarantriebssystems (1) ermöglicht, den Läufer (100) mit dem ersten Planarantriebsteilsystem (11) und dem zweiten Planarantriebsteilsystem (31) kooperierend anzutreiben und eine Kontrolle des Läufers (100) von der ersten Steuereinheit (21) an die zweite Steuereinheit (41) zu übergeben, mit den folgenden Schritten, die vor einer Kontrollübergabe von der ersten Steuereinheit (21) auf die zweite Steuereinheit (41) stattfinden:
- Auslösen einer Antriebskooperation anhand einer Randbedingung durch die erste Steuereinheit (21);
- Ausgabe eines Kooperationssignals an die zweite Steuereinheit (41) durch die erste Steuereinheit (21);
- Empfang des Kooperationssignals durch die zweite Steuereinheit (41);
- Ausführen eines ersten Positionssteuerablaufs (218) und eines zweiten Positionssteuerablaufs (219),
wobei der erste Positionssteuerablauf (218) die folgenden Schritte aufweist:
- Ausgabe der zweiten Messwerte an die erste Steuereinheit (21) durch die zweite Steuereinheit (41);
- Empfang der zweiten Messwerte durch die erste Steuereinheit (21);
- Ermitteln von ersten Läuferpositionsdaten aus den ersten Messwerten und den zweiten Messwerten durch die erste Steuereinheit (21);
- Vergleich der ersten Läuferpositionsdaten mit ersten Läuferpositionssolldaten und Berechnung von einer ersten Stellgröße für eines der ersten Antriebselemente (15) und/oder Berechnung von einer zweiten Stellgröße für eines der zweiten Antriebselemente (35) anhand des Vergleichs der ersten Läuferpositionsdaten mit den ersten Läuferpositionssolldaten durch die erste Steuereinheit (21);
- Ausgabe der zweiten Stellgröße an die zweite Steuereinheit (41) durch die erste Steuereinheit (21), falls die zweiten Stellgröße berechnet wurde;
- Empfang der zweiten Stellgröße durch die zweite Steuereinheit (41);
und wobei der zweite Positionssteuerablauf (219) die folgenden Schritte aufweist:
- Ausgabe der ersten Messwerte an die zweite Steuereinheit (41) durch die erste Steuereinheit (21);
- Empfang der ersten Messwerte durch die zweite Steuereinheit (41);
- Ermitteln von zweiten Läuferpositionsdaten aus den zweiten Messwerten und den ersten Messwerten durch die zweite Steuereinheit (41);
- Vergleich der zweiten Läuferpositionsdaten mit zweiten Läuferpositionssolldaten und Berechnung einer ersten redundanten Stellgröße für eines der ersten Antriebselemente (15) und/oder Berechnung einer zweiten redundanten Stellgröße für eines der zweiten Antriebselemente (35) durch die zweite Steuereinheit (41);
- Ausgabe der ersten redundanten Stellgröße an die erste Steuereinheit (21) durch die zweite Steuereinheit (41);
- Empfang der ersten redundanten Stellgröße durch die erste Steuereinheit (21);
- Betreiben des ersten Antriebselements (15) mit der für das erste Antriebselement (15) berechneten ersten Stellgröße durch die erste Steuereinheit (21);
- Betreiben des zweiten Antriebselements (35) mit der für das zweite Antriebselement (35) berechneten zweiten Stellgröße durch die zweite Steuereinheit (41).

2. Verfahren nach Anspruch 1, wobei die Schritte
- Ausgabe der zweiten Messwerte an die erste Steuereinheit (21) durch die zweite Steuereinheit (41);
- Empfang der zweiten Messwerte durch die erste Steuereinheit (21);
- Ermitteln von ersten Läuferpositionsdaten aus den ersten Messwerten und den zweiten Messwerten durch die erste Steuereinheit (21);
- Vergleich der ersten Läuferpositionsdaten mit ersten Läuferpositionssolldaten und Berechnung von einer ersten Stellgröße für eines der ersten Antriebselemente (15) und/oder Berechnung von einer zweiten Stellgröße für eines der zweiten Antriebselemente (35) durch die erste Steuereinheit (21);
- Ausgabe der zweiten Stellgröße an die zweite Steuereinheit (41) durch die erste Steuereinheit (21), falls die zweite Stellgröße berechnet wurde;
- Empfang der zweiten Stellgröße durch die zweite Steuereinheit (41);
- Betreiben des ersten Antriebselements (15) mit der für das erste Antriebselement (15) berechneten ersten Stellgröße durch die erste Steuereinheit (21);
- Betreiben des zweiten Antriebselements (35) mit der für das zweite Antriebselement (35) berechneten zweiten Stellgröße durch die zweite Steuereinheit (41);
zyklisch wiederholt werden.

3. Verfahren nach Anspruch 1 oder 2, wobei das Kooperationssignal ein Transfersignal ist und nach dem Empfang des Transfersignals durch die zweite Steuereinheit (41) diese überprüft, ob ein Läufertransfer möglich ist, wobei für den Fall, dass ein Läufertransfer möglich ist, eine Bestätigung an die erste Steuereinheit (21) ausgegeben wird und für den Fall, dass kein Läufertransfer möglich ist, eine Fehlermeldung an die erste Steuereinheit (21) ausgegeben wird.

4. Verfahren nach Anspruch 3, wobei die zweite Steuereinheit (41) überprüft, ob ein Läufertransfer möglich ist, indem eine freie Rechenkapazität der zweiten Steuereinheit (41) ausgewertet wird.

5. Verfahren nach einem der Ansprüche 3 oder 4, wobei ein Läuferübergang vom ersten Planarantriebsteilsystem (11) auf das zweite Planarantriebsteilsystem (31) und ein Kontrollübergang von der ersten Steuereinheit (21) auf die zweite Steuereinheit (41) stattfindet, wobei nach dem Kontrollübergang folgende Schritte durchgeführt werden:
- Ausgabe der ersten Messwerte an die zweite Steuereinheit (41) durch die erste Steuereinheit (21);
- Empfang der ersten Messwerte durch die zweite Steuereinheit (41);
- Ermitteln von zweiten Läuferpositionsdaten aus den ersten Messwerten und den zweiten Messwerten durch die zweite Steuereinheit (41);
- Vergleich der zweiten Läuferpositionsdaten mit zweiten Läuferpositionssolldaten und Berechnung von einer ersten Stellgröße für eines der ersten Antriebselemente (15) und/oder Berechnung von einer zweiten Stellgröße für eines der zweiten Antriebselemente (35) durch die zweite Steuereinheit (41);
- Ausgabe der ersten Stellgröße an die erste Steuereinheit (21) durch die zweite Steuereinheit (41), falls die erste Stellgröße berechnet wurde;
- Empfang der ersten Stellgröße durch die erste Steuereinheit (21);
- Betreiben des ersten Antriebselements (15) mit der für das erste Antriebselement (15) berechneten ersten Stellgröße durch die erste Steuereinheit (21);
- Betreiben des zweiten Antriebselements (35) mit der für das zweite Antriebselement (35) berechneten zweiten Stellgröße durch die zweite Steuereinheit (41).

6. Verfahren nach Anspruch 5, wobei die Schritte
- Ausgabe der ersten Messwerte an die zweite Steuereinheit (41) durch die erste Steuereinheit (21);
- Empfang der ersten Messwerte durch die zweite Steuereinheit (41);
- Ermitteln von zweiten Läuferpositionsdaten aus den zweiten Messwerten und den ersten Messwerten durch die zweite Steuereinheit (41);
- Vergleich der zweiten Läuferpositionsdaten mit zweiten Läuferpositionssolldaten und Berechnung von einer ersten Stellgröße für eines der ersten Antriebselemente (15) und/oder Berechnung von einer zweiten Stellgröße für eines der zweiten Antriebselemente (35) durch die zweite Steuereinheit (41);
- Ausgabe der ersten Stellgröße an die erste Steuereinheit (21) durch die zweite Steuereinheit (41), falls die ersten Stellgröße berechnet wurde;
- Empfang der ersten Stellgröße durch die erste Steuereinheit (21);
- Betreiben des ersten Antriebselements (15) mit der für das erste Antriebselement (15) berechneten ersten Stellgröße durch die erste Steuereinheit (21);
- Betreiben des zweiten Antriebselements (35) mit der für das zweite Antriebselement (35) berechneten zweiten Stellgröße durch die zweite Steuereinheit (41);
zyklisch wiederholt werden.

7. Verfahren nach Anspruch 5 oder 6, ferner aufweisend die nach dem Kontrollübergang durchgeführten folgenden Schritte:
- Ausgabe der zweiten Messwerte an die erste Steuereinheit (21) durch die zweite Steuereinheit (41);
- Empfang der zweiten Messwerte durch die erste Steuereinheit (21);
- Ermitteln von ersten Läuferpositionsdaten aus den ersten Messwerten und den zweiten Messwerten durch die erste Steuereinheit (21);
- Vergleich der ersten Läuferpositionsdaten mit ersten Läuferpositionssolldaten und Berechnung von einer ersten redundanten Stellgröße für eines der ersten Antriebselemente (15) und/oder Berechnung von einer zweiten redundanten Stellgröße für eines der zweiten Antriebselemente (35) durch die erste Steuereinheit (21);
- Ausgabe der zweiten redundanten Stellgröße an die zweite Steuereinheit (41) durch die erste Steuereinheit (21);
- Empfang der zweiten redundanten Stellgröße durch die zweite Steuereinheit (41).

8. Verfahren nach einem der Ansprüche 1 bis 7, wobei läuferspezifische Daten zwischen der ersten Steuereinheit (21) und der zweiten Steuereinheit (41) übertragen werden.

9. Verfahren nach einem der Ansprüche 1 bis 8, wobei das Planarantriebssystem (1) ferner eine Zentralsteuereinheit (2) aufweist, wobei die Zentralsteuereinheit (2) erste Läuferpositionsdaten von der ersten Steuereinheit (21) empfängt, zweite Läuferpositionsdaten von der zweiten Steuereinheit (41) empfängt und wobei die Zentralsteuereinheit (2) einen Kooperationsbefehl an die erste Steuereinheit (21) ausgibt, wobei der Kooperationsbefehl eine Randbedingung darstellt.

10. Verfahren nach Anspruch 9, wobei die Zentralsteuereinheit (2) bei der zweiten Steuereinheit (41) abfragt, ob ein Läufertransfer möglich ist, wobei die zweite Steuereinheit (41) überprüft, ob ein Läufertransfer möglich ist, wobei für den Fall, dass ein Läufertransfer möglich ist, eine Bestätigung an die Zentralsteuereinheit (2) ausgegeben wird und für den Fall, dass kein Läufertransfer möglich ist, eine Fehlermeldung an die Zentralsteuereinheit (2) ausgegeben wird.

11. Verfahren nach Anspruch 9 oder 10, wobei die Zentralsteuereinheit (2) anhand der ersten Läuferpositionsdaten und der zweiten Läuferpositionsdaten erkennt, dass der Läufertransfer abgeschlossen ist und ein Terminierungssignal an die erste Steuereinheit (21) und/oder die zweite Steuereinheit (41) ausgibt.

12. Verfahren nach einem der Ansprüche 9 bis 11, wobei die Zentralsteuereinheit (2) einen Kontrollübergabebefehl an die erste Steuereinheit (21) und/oder die zweite Steuereinheit (41) ausgibt und wobei ein Kontrollübergang anhand des Kontrollübergabebefehls durchgeführt wird.

13. Verfahren nach einem der Ansprüche 9 bis 12, wobei die Zentralsteuereinheit (2) erste Läuferpositionssolldaten an die erste Steuereinheit (21) und/oder zweite Läuferpositionssolldaten an die zweite Steuereinheit (41) ausgibt.

14. Verfahren nach einem der Ansprüche 1 bis 13, wobei die Antriebskooperation gestartet wird, wenn sich ein Läufer (100) innerhalb eines vorgegebenen Abstandes zu einem Randbereich des ersten Planarantriebsteilsystems (11) befindet.

15. Planarantriebssystem (1), wobei das Planarantriebssystem (1) ein erstes Planarantriebsteilsystem (11) und ein zweites Planarantriebsteilsystem (31) aufweist, wobei das erste Planarantriebsteilsystem (11) erste Statormodule (12) mit ersten Statoreinheiten (13) aufweist, die eine erste Statorfläche (14) bilden, wobei die ersten Statormodule (12) erste Antriebselemente (15) und erste Positionsdetektoren (16) aufweisen, wobei das erste Planarantriebsteilsystem (11) ferner eine erste Steuereinheit (21) aufweist, wobei das zweite Planarantriebsteilsystem (31) zweite Statormodule (32) mit zweiten Statoreinheiten (33) aufweist, die eine zweite Statorfläche (34) bilden, wobei die zweiten Statormodule (32) zweite Antriebselemente (35) und zweite Positionsdetektoren (36) aufweist, wobei das zweite Planarantriebsteilsystem (31) ferner eine zweite Steuereinheit (41) aufweist, wobei die erste Statorfläche (14) an die zweite Statorfläche (34) angrenzt, wobei das Planarantriebssystem (1) ferner zumindest einen Läufer (100) aufweist, der mittels der ersten Antriebselemente (15) und der zweiten Antriebselemente (35) oberhalb der ersten Statorfläche (14) und/ oder der zweiten Statorfläche (34) in zumindest zwei Richtungen bewegbar ist, wobei das Verfahren zum Betreiben des Planarantriebssystems (1) gemäß der Ansprüche 1 bis 14 ermöglicht, den Läufer (100) mit dem ersten Planarantriebsteilsystem (11) und dem zweiten Planarantriebsteilsystem (31) kooperierend anzutreiben.

## Claims

1. A method for operating a planar drive system (1), wherein the planar drive system (1) comprises a first planar drive partial system (11) and a second planar drive partial system (31), wherein the first planar drive partial system (11) comprises first stator modules (12) forming a first stator surface (14), wherein the first stator modules (12) comprise first drive elements (15) and first position detectors (16), wherein the first planar drive partial system (11) further comprises a first controller (21) with the aid of which the first drive elements (15) may be actuated, wherein the first controller (21) is furthermore set up to read in first measured values of the first position detectors (16), wherein the second planar drive partial system (31) comprises second stator modules (32) which form a second stator surface (34), wherein the second stator modules (32) comprise second drive elements (35) and second position detectors (36), wherein the second planar drive partial system (31) further comprises a second controller (41) with the aid of which the second drive elements (35) may be actuated, wherein the second controller (41) is further arranged to read in second measured values of the second position detectors (36), wherein the first stator surface (14) is adjacent to the second stator surface (34), wherein the planar drive system (1) further comprises at least one rotor (100) which is movable in at least two directions above the first stator surface (14) and/or the second stator surface (35) with the aid of the first drive elements (15) and the second drive elements (35) wherein the method for operating the planar drive system (1) allows for driving the rotor (100) cooperatively with the aid of the first planar drive partial system (11) and the second planar drive partial system (31), comprising the following steps:
- triggering a drive cooperation based on a marginal condition via the first controller (21);
- outputting a cooperation signal to the second controller (41) via the first controller (21);
- receiving the cooperation signal via the second controller (41);
- executing a first position control procedure (218) and a second position control procedure (219),
wherein the first position control procedure (218) comprises the following steps:
- outputting the second measured values to the first controller (21) via the second controller (41);
- receiving the second measured values via the first controller (21);
- determining first rotor position data from the first measured values and the second measured values via the first controller (21);
- comparing the first rotor position data with first rotor position target data and calculating a first actuating value for one of the first drive elements (15) and/or calculating a second actuating value for one of the second drive elements (35) on the basis of the comparison of the first rotor position data with the first rotor position target data via the first controller (21);
- outputting the second actuating value to the second controller (41) via the first controller (21) if the second actuating value has been calculated;
- receiving the second actuating value via the second controller (41);
and wherein the second position control procedure (218) comprises the following steps:
- outputting the first measured values to the second controller (41) via the second controller (21);
- receiving the first measured values via the second controller (41);
- determining second rotor position data from the second measured values and the first measured values via the second controller (21);
- comparing the second rotor position data with second rotor position target data and calculating a first redundant actuating value for one of the first drive elements (15) and/or calculating a second redundant actuating value for one of the second drive elements (35) via the second controller (41);
- outputting the first actuating value to the first controller (41) via the second controller (41);
- receiving the first actuating value via the first controller (21);
- operating the first drive element (15) with the aid of the first actuating value calculated for the first drive element (15) via the first controller (21);
- operating the second drive element (35) with the aid of the second actuating value calculated for the second drive element (35) via the second controller (41).

2. The method according to claim 1, wherein the steps of
- outputting the second measured values to the first controller (21) via the second controller (41);
- receiving the second measured values via the first controller (21);
- determining first rotor position data from the first measured values and the second measured values via the first controller (21);
- comparing the first rotor position data with first rotor position target data and calculating a first actuating value for one of the first drive elements (15) and/or calculating a second actuating value for one of the second drive elements (35) via the first controller (21);
- outputting the second actuating value to the second controller (41) via the first controller (21) if the second actuating value has been calculated;
- receiving the second actuating value via the second controller (41);
- operating the first drive element (15) with the aid of the first actuating value calculated for the first drive element (15) via the first controller (21);
- operating the second drive element (35) with the aid of the second actuating value calculated for the second drive element (35) via the second controller (41);
are repeated cyclically.

3. The method according to claim 1 or 2, wherein the cooperation signal is a transfer signal and, after the transfer signal has been received via the second controller (41), the second controller checks whether a rotor transfer is possible, wherein, if a rotor transfer is possible, a confirmation is output to the first controller (21) and, if no rotor transfer is possible, an error message is output to the first controller (21).

4. The method according to claim 3, wherein the second controller (41) checks whether a rotor transfer is possible by evaluating a free computing capacity of the second controller (41).

5. The method according to any one of claims 3 or 4, wherein a rotor transition from the first planar drive partial system (11) to the second planar drive partial system (31) and a control transition from the first controller (21) to the second controller (41) takes place, wherein the following steps are carried out after the control transition:
- outputting the first measured values to the second controller (41) via the first controller (21);
- receiving the first measured values via the second controller (41);
- determining second rotor position data from the first measured values and the second measured values via the second controller (41);
- comparing the second rotor position data with second rotor position target data and calculating a first actuating value for one of the first drive elements (15) and/or calculating a second actuating value for one of the second drive elements (35) via the second controller (41);
- outputting the first actuating value to the first controller (21) via the second controller (41) if the first actuating value has been calculated;
- receiving the first actuating value via the first controller (21);
- operating the first drive element (15) with the aid of the first actuating value calculated for the first drive element (15) via the first controller (21);
- operating the second drive element (35) with the aid of the second actuating value calculated for the second drive element (35) via the second controller (41).

6. The method according to claim 5, wherein the steps of
- outputting the first measured values to the second controller (41) via the first controller (21);
- receiving the first measured values via the second controller (41);
- determining second rotor position data from the second measured values and the first measured values via the second controller (41);
- comparing the second rotor position data with second rotor position target data and calculating a first actuating value for one of the first drive elements (15) and/or calculating a second actuating value for one of the second drive elements (35) via the second controller (41);
- outputting the first actuating value to the first controller (21) via the second controller (41) if the first actuating value has been calculated;
- receiving the first actuating value via the first controller (21);
- operating the first drive element (15) with the aid of the first actuating value calculated for the first drive element (15) via the first controller (21);
- operating the second drive element (35) with the aid of the second actuating value calculated for the second drive element (35) via the second controller (41);
are repeated cyclically.

7. The method according to claim 5 or 6, further comprising the following steps carried out after the control transition:
- outputting the second measured values to the first controller (21) via the second controller (41);
- receiving the second measured values via the first controller (21);
- determining first rotor position data from the first measured values and the second measured values via the first controller (21);
- comparing the first rotor position data with first rotor position target data and calculating a first redundant actuating value for one of the first drive elements (15) and/or calculating a second redundant actuating value for one of the second drive elements (35) via the first controller (21);
- outputting the second redundant actuating value to the second controller (41) via the first controller (21);
- receiving the second redundant actuating value via the second controller (41).

8. The method according to any one of claims 1 to 7, wherein rotor-specific data are transmitted between the first controller (21) and the second controller (41).

9. The method according to any one of claims 1 to 8, wherein the planar drive system (1) further comprises a central controller (2), wherein the central controller (2) receives first rotor position data from the first controller (21), receives second rotor position data from the second controller (41), and wherein the central controller (2) issues a cooperation command to the first controller (21), wherein the cooperation command represents a marginal condition.

10. The method according to claim 9, wherein the central controller (2) queries the second controller (41) as to whether a rotor transfer is possible, wherein the second controller (41) checks whether a rotor transfer is possible, wherein a confirmation is output to the central controller (2) if a rotor transfer is possible and an error message is output to the central controller (2) if a rotor transfer is not possible.

11. The method according to claim 9 or 10, wherein the central controller (2) recognizes from the first rotor position data and the second rotor position data that the rotor transfer is completed and outputs a termination signal to the first controller (21) and/or the second controller (41).

12. The method according to any one of claims 9 to 11, wherein the central controller (2) issues a control transfer command to the first controller (21) and/or the second controller (41), and wherein a control transfer is carried out based on the control transfer command.

13. The method according to any one of claims 9 to 12, wherein the central controller (2) outputs first rotor position target data to the first controller (21) and/or second rotor position target data to the second controller (41).

14. The method according to any one of claims 1 to 14, wherein the drive cooperation is started when a rotor (100) is within a predetermined distance of an edge region of the first planar drive partial system (11).

15. A planar drive system (1), wherein the planar drive system (1) comprises a first planar drive partial system (11) and a second planar drive partial system (31), wherein the first planar drive partial system (11) comprises first stator modules (12) having first stator assemblies (13) forming a first stator surface (14), wherein the first stator modules (12) comprises first drive elements (15) and first position detectors (16), wherein the first planar drive partial system (11) further comprises a first controller (21) according to claim 17, wherein the second planar drive partial system (31) comprises second stator modules (32) having second stator assemblies (33) forming a second stator surface (34), wherein the second stator modules (32) comprise second drive elements (35) and second position detectors (36), wherein the second planar drive partial system (31) further comprises a second controller (41), wherein the first stator surface (14) is adjacent to the second stator surface (34), wherein the planar drive system (1) further comprises at least one rotor (100) which is movable in at least two directions above the first stator surface (14) and/or the second stator surface (34) with the aid of the first drive elements (15) and the second drive elements (35), wherein the method for operating the planar drive system (1) according to claims 1 to 15 allows for driving the rotor (100) cooperatively with the first planar drive partial system (11) and the second planar drive partial system (31).

## Revendications

1. Procédé pour faire fonctionner un système d'entraînement plan (1), le système d'entraînement plan (1) possédant un premier sous-système d'entraînement plan (11) et un deuxième sous-système d'entraînement plan (31), le premier sous-système d'entraînement plan (11) possédant des premiers modules de stator (12) qui forment une première surface de stator (14), les premiers modules de stator (12) possédant des premiers éléments d'entraînement (15) et des premiers détecteurs de position (16), le premier sous-système d'entraînement plan (11) possédant en outre une première unité de commande (21) qui permet de commander les premiers éléments d'entraînement (15), la première unité de commande (21) étant en outre conçue pour lire des premières valeurs mesurées des premiers détecteurs de position (16), le deuxième sous-système d'entraînement plan (31) possédant des deuxièmes modules de stator (32) qui forment une deuxième surface de stator (34), les deuxièmes modules de stator (32) possédant des deuxièmes éléments d'entraînement (35) et des deuxièmes détecteurs de position (36), le deuxième sous-système d'entraînement plan (31) possédant en outre une deuxième unité de commande (41) qui permet de commander les deuxièmes éléments d'entraînement (35), la deuxième unité de commande (41) étant en outre conçue pour lire des deuxièmes valeurs mesurées des deuxièmes détecteurs de position (36), la première surface de stator (14) étant adjacente à la deuxième surface de stator (34), le système d'entraînement plan (1) possédant en outre au moins un rotor (100) qui peut être déplacé au moyen des premiers éléments d'entraînement (15) et des deuxièmes éléments d'entraînement (35) au-dessus de la première surface de stator (14) et/ou de la deuxième surface de stator (35) dans au moins deux directions, le procédé pour faire fonctionner le système d'entraînement plan (1) permettant d'entraîner le rotor (100) avec le premier sous-système d'entraînement plan (11) et le deuxième sous-système d'entraînement plan (31) et de transférer un contrôle du rotor (100) de la première unité de commande (21) à la deuxième unité de commande (41), comprenant les étapes suivantes, qui ont lieu avant un transfert de contrôle de la première unité de commande (21) à la deuxième unité de commande (41) :
- déclenchement d'une coopération d'entraînement à l'aide d'une condition limite par la première unité de commande (21) ;
- délivrance d'un signal de coopération à la deuxième unité de commande (41) par la première unité de commande (21) ;
- réception du signal de coopération par la deuxième unité de commande (41) ;
- exécution d'une première séquence de commande de position (218) et d'une deuxième séquence de commande de position (219),
la première séquence de commande de position (218) comprenant les étapes suivantes :
- délivrance des deuxièmes valeurs mesurées à la première unité de commande (21) par la deuxième unité de commande (41) ;
- réception des deuxièmes valeurs mesurées par la première unité de commande (21) ;
- détermination de premières données de position du rotor à partir des premières valeurs mesurées et des deuxièmes valeurs mesurées par la première unité de commande (21) ;
- comparaison des premières données de position du rotor avec les premières données de position de consigne du rotor et calcul d'une première grandeur de réglage pour l'un des premiers éléments d'entraînement (15) et/ou calcul d'une deuxième grandeur de réglage pour l'un des deuxièmes éléments d'entraînement (35) à l'aide de la comparaison des premières données de position du rotor avec les premières données de position de consigne du rotor par la première unité de commande (21) ;
- délivrance de la deuxième grandeur de réglage à la deuxième unité de commande (41) par la première unité de commande (21), dans le cas où la deuxième grandeur de réglage a été calculée ;
- réception de la deuxième grandeur de réglage par la deuxième unité de commande (41) ;
et la deuxième séquence de commande de position (219) comprenant les étapes suivantes :
- délivrance des premières valeurs mesurées à la deuxième unité de commande (41) par la première unité de commande (21) ;
- réception des deuxièmes valeurs mesurées par la deuxième unité de commande (41) ;
- détermination de deuxièmes données de position du rotor à partir des deuxièmes valeurs mesurées et des premières valeurs mesurées par la deuxième unité de commande (41) ;
- comparaison des deuxièmes données de position du rotor avec des deuxièmes données de consigne de position du rotor et calcul d'une première grandeur de réglage redondante pour l'un des premiers éléments d'entraînement (15) et/ou calcul d'une deuxième grandeur de réglage redondante pour l'un des deuxièmes éléments d'entraînement (35) par la deuxième unité de commande (41) ;
- délivrance de la première grandeur de réglage redondante à la première unité de commande (21) par la deuxième unité de commande (41) ;
- réception de la première grandeur de réglage redondante par la première unité de commande (21) ;
- mise en fonctionnement du premier élément d'entraînement (15) avec la première grandeur de réglage calculée pour le premier élément d'entraînement (15) par la première unité de commande (21) ;
- mise en fonctionnement du deuxième élément d'entraînement (35) avec la deuxième grandeur de réglage calculée pour le deuxième élément d'entraînement (35) par la deuxième unité de commande (41).

2. Procédé selon la revendication 1, les étapes
- délivrance des deuxièmes valeurs mesurées à la première unité de commande (21) par la deuxième unité de commande (41) ;
- réception des deuxièmes valeurs mesurées par la première unité de commande (21) ;
- détermination de premières données de position du rotor à partir des premières valeurs mesurées et des deuxièmes valeurs mesurées par la première unité de commande (21) ;
- comparaison des premières données de position du rotor avec les premières données de position de consigne du rotor et calcul d'une première grandeur de réglage pour l'un des premiers éléments d'entraînement (15) et/ou calcul d'une deuxième grandeur de réglage pour l'un des deuxièmes éléments d'entraînement (35) par la première unité de commande (21) ;
- délivrance de la deuxième grandeur de réglage à la deuxième unité de commande (41) par la première unité de commande (21), dans le cas où la deuxième grandeur de réglage a été calculée ;
- réception de la deuxième grandeur de réglage par la deuxième unité de commande (41) ;
- mise en fonctionnement du premier élément d'entraînement (15) avec la première grandeur de réglage calculée pour le premier élément d'entraînement (15) par la première unité de commande (21) ;
- mise en fonctionnement du deuxième élément d'entraînement (35) avec la deuxième grandeur de réglage calculée pour le deuxième élément d'entraînement (35) par la deuxième unité de commande (41) ;
étant répétées de manière cyclique.

3. Procédé selon la revendication 1 ou 2, le signal de coopération étant un signal de transfert et, après la réception du signal de transfert par la deuxième unité de commande (41), celle-ci vérifie si un transfert de rotor est possible, une confirmation étant délivrée à la première unité de commande (21) dans le cas où un transfert de rotor est possible et, dans le cas où aucun transfert de rotor n'est possible, un message d'erreur étant délivré à la première unité de commande (21).

4. Procédé selon la revendication 3, la deuxième unité de commande (41) vérifiant si un transfert de rotor est possible en évaluant une capacité de calcul libre de la deuxième unité de commande (41).

5. Procédé selon l'une des revendications 3 ou 4, une transition de rotor du premier sous-système d'entraînement plan (11) vers le deuxième sous-système d'entraînement plan (31) et une transition de contrôle de la première unité de commande (21) vers la deuxième unité de commande (41) ayant lieu, les étapes suivantes étant exécutées après la transition de contrôle :
- délivrance des premières valeurs mesurées à la deuxième unité de commande (41) par la première unité de commande (21) ;
- réception des deuxièmes valeurs mesurées par la deuxième unité de commande (41) ;
- détermination de deuxièmes données de position du rotor à partir des premières valeurs mesurées et des deuxièmes valeurs mesurées par la deuxième unité de commande (41) ;
- comparaison des deuxièmes données de position du rotor avec des deuxièmes données de consigne de position du rotor et calcul d'une première grandeur de réglage pour l'un des premiers éléments d'entraînement (15) et/ou calcul d'une deuxième grandeur de réglage pour l'un des deuxièmes éléments d'entraînement (35) par la deuxième unité de commande (41) ;
- délivrance de la première grandeur de réglage à la première unité de commande (21) par la deuxième unité de commande (41), dans le cas où la première grandeur de réglage a été calculée ;
- réception de la première grandeur de réglage par la première unité de commande (21) ;
- mise en fonctionnement du premier élément d'entraînement (15) avec la première grandeur de réglage calculée pour le premier élément d'entraînement (15) par la première unité de commande (21) ;
- mise en fonctionnement du deuxième élément d'entraînement (35) avec la deuxième grandeur de réglage calculée pour le deuxième élément d'entraînement (35) par la deuxième unité de commande (41).

6. Procédé selon la revendication 5, les étapes
- délivrance des premières valeurs mesurées à la deuxième unité de commande (41) par la première unité de commande (21) ;
- réception des deuxièmes valeurs mesurées par la deuxième unité de commande (41) ;
- détermination de deuxièmes données de position du rotor à partir des deuxièmes valeurs mesurées et des premières valeurs mesurées par la deuxième unité de commande (41) ;
- comparaison des deuxièmes données de position du rotor avec des deuxièmes données de consigne de position du rotor et calcul d'une première grandeur de réglage pour l'un des premiers éléments d'entraînement (15) et/ou calcul d'une deuxième grandeur de réglage pour l'un des deuxièmes éléments d'entraînement (35) par la deuxième unité de commande (41) ;
- délivrance de la première grandeur de réglage à la première unité de commande (21) par la deuxième unité de commande (41), dans le cas où la première grandeur de réglage a été calculée ;
- réception de la première grandeur de réglage par la première unité de commande (21) ;
- mise en fonctionnement du premier élément d'entraînement (15) avec la première grandeur de réglage calculée pour le premier élément d'entraînement (15) par la première unité de commande (21) ;
- mise en fonctionnement du deuxième élément d'entraînement (35) avec la deuxième grandeur de réglage calculée pour le deuxième élément d'entraînement (35) par la deuxième unité de commande (41) ;
étant répétées de manière cyclique.

7. Procédé selon la revendication 5 ou 6, comprenant en outre les étapes suivantes exécutées après le transfert de contrôle :
- délivrance des deuxièmes valeurs mesurées à la première unité de commande (21) par la deuxième unité de commande (41) ;
- réception des deuxièmes valeurs mesurées par la première unité de commande (21) ;
- détermination de premières données de position du rotor à partir des premières valeurs mesurées et des deuxièmes valeurs mesurées par la première unité de commande (21) ;
- comparaison des premières données de position du rotor avec les premières données de position de consigne du rotor et calcul d'une première grandeur de réglage redondante pour l'un des premiers éléments d'entraînement (15) et/ou calcul d'une deuxième grandeur de réglage redondante pour l'un des deuxièmes éléments d'entraînement (35) par la première unité de commande (21) ;
- délivrance de la deuxième grandeur de réglage redondante à la deuxième unité de commande (41) par la première unité de commande (21) ;
- réception de la deuxième grandeur de réglage redondante par la deuxième unité de commande (41).

8. Procédé selon l'une des revendications 1 à 7, des données spécifiques au rotor étant transmises entre la première unité de commande (21) et la deuxième unité de commande (41).

9. Procédé selon l'une des revendications 1 à 8, le système d'entraînement plan (1) possédant en outre une unité de commande centrale (2), l'unité de commande centrale (2) recevant des premières données de position de rotor en provenance de la première unité de commande (21), recevant des deuxièmes données de position de rotor en provenance de la deuxième unité de commande (41), et l'unité de commande centrale (2) délivrant une instruction de coopération à la première unité de commande (21), l'instruction de coopération représentant une condition limite.

10. Procédé selon la revendication 9, l'unité de commande centrale (2) interrogeant la deuxième unité de commande (41) pour savoir si un transfert de rotor est possible, la deuxième unité de commande (41) vérifiant si un transfert de rotor est possible, une confirmation étant délivrée à l'unité de commande centrale (2) dans le cas où un transfert de rotor est possible et, dans le cas où aucun transfert de rotor n'est possible, un message d'erreur étant délivré à l'unité de commande centrale (2).

11. Procédé selon la revendication 9 ou 10, l'unité de commande centrale (2) reconnaissant, à l'aide des premières données de position du rotor et des deuxièmes données de position du rotor, que le transfert du rotor est terminé et délivrant un signal de fin à la première unité de commande (21) et/ou à la deuxième unité de commande (41).

12. Procédé selon l'une des revendications 9 à 11, l'unité de commande centrale (2) délivrant une instruction de transfert de contrôle à la première unité de commande (21) et/ou à la deuxième unité de commande (41) et un transfert de contrôle étant effectué sur la base de l'instruction de transfert de contrôle.

13. Procédé selon l'une des revendications 9 à 12, l'unité de commande centrale (2) délivrant des premières données de consigne de position du rotor à la première unité de commande (21) et/ou des deuxièmes données de consigne de position du rotor à la deuxième unité de commande (41).

14. Procédé selon l'une des revendications 1 à 13, la coopération d'entraînement étant démarrée lorsqu'un rotor (100) se trouve à l'intérieur d'une distance prédéfinie par rapport à une périphérie du premier sous-système d'entraînement plan (11).

15. Système d'entraînement plan (1), le système d'entraînement plan (1) possédant un premier sous-système d'entraînement plan (11) et un deuxième sous-système d'entraînement plan (31), le premier sous-système d'entraînement plan (11) possédant des premiers modules de stator (12) avec des premières unités de stator (13) qui forment une première surface de stator (14), les premiers modules de stator (12) possédant des premiers éléments d'entraînement (15) et des premiers détecteurs de position (16), le premier sous-système d'entraînement plan (11) possédant en outre une première unité de commande (21), le deuxième sous-système d'entraînement plan (31) possédant des deuxièmes modules de stator (32) avec des deuxièmes unités de stator (33) qui forment une deuxième surface de stator (34), les deuxièmes modules de stator (32) possédant des deuxièmes éléments d'entraînement (35) et des deuxièmes détecteurs de position (36), le deuxième sous-système d'entraînement plan (31) possédant en outre une deuxième unité de commande (41), la première surface de stator (14) étant adjacente à la deuxième surface de stator (34), le système d'entraînement plan (1) possédant en outre au moins un rotor (100) qui peut être déplacé au-dessus de la première surface de stator (14) et/ou de la deuxième surface de stator (34) dans au moins deux directions au moyen des premiers éléments d'entraînement (15) et des deuxièmes éléments d'entraînement (35) dans au moins deux directions, le procédé pour faire fonctionner le système d'entraînement plan (1) selon les revendications 1 à 14 permettant d'entraîner le rotor (100) en coopération avec le premier sous-système d'entraînement plan (11) et le deuxième sous-système d'entraînement plan (31).
